(19) Europäisches Patentamt / European Patent Office / Office européen des brevets

(11) **EP 3 460 295 B1**

(12) **EUROPEAN PATENT SPECIFICATION**

(45) Date of publication and mention
of the grant of the patent:
**21.12.2022 Bulletin 2022/51**

(21) Application number: **17799374.8**

(22) Date of filing: **16.05.2017**

(51) International Patent Classification (IPC):
*F16J 15/10* (2006.01)    *B60J 10/24* (2016.01)
*B60J 10/86* (2016.01)    *E06B 7/23* (2006.01)
*B60J 10/18* (2016.01)

(52) Cooperative Patent Classification (CPC):
**B60J 10/24; F16J 15/10;** B60J 10/86; E06B 7/23

(86) International application number:
**PCT/JP2017/018356**

(87) International publication number:
**WO 2017/199950 (23.11.2017 Gazette 2017/47)**

(54) **SEAL MEMBER, MANUFACTURING METHOD THEREFOR, VEHICLE DOOR, AND BUILDING DOOR**

DICHTUNGSELEMENT, HERSTELLUNGSVERFAHREN DAFÜR, FAHRZEUGTÜR UND GEBÄUDETÜR

ÉLÉMENT D'ÉTANCHÉITÉ, PROCÉDÉ DE FABRICATION ASSOCIÉ, PORTE DE VÉHICULE ET PORTE DE BÂTIMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2016  JP 2016098932**
**17.11.2016  JP 2016224233**
**07.02.2017  JP 2017020489**

(43) Date of publication of application:
**27.03.2019  Bulletin 2019/13**

(73) Proprietor: **Mitsui Chemicals, Inc.**
**Minato-ku**
**Tokyo 105-7122 (JP)**

(72) Inventors:
• **TAKEUCHI Fumito**
**Ichihara-shi**
**Chiba 299-0108 (JP)**

• **GOTO Kengo**
**Ichihara-shi**
**Chiba 299-0108 (JP)**

(74) Representative: **Hoffmann Eitle**
**Patent- und Rechtsanwälte PartmbB**
**Arabellastraße 30**
**81925 München (DE)**

(56) References cited:
**EP-A1- 0 544 961      EP-A1- 1 452 372**
**JP-A- S61 171 786     JP-A- 2000 272 353**
**JP-A- 2011 016 907    JP-B2- 2 634 591**
**JP-B2- 4 179 545      JP-B2- 4 912 860**
**JP-B2- 5 442 591      JP-B2- 5 442 591**
**JP-U- H0 275 316      JP-U- H0 275 316**
**JP-U- S5 540 181      US-A1- 2002 129 558**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a seal member used in, for example, the door of a vehicle or building, to the manufacturing method of the seal member, and to a vehicle door or building door that includes the seal member.

Background Art

A door that is provided in a building or a vehicle such as an automobile is of a configuration in which a seal member (packing) for raising sealability is attached to the outer periphery of the door body that is made of a rigid body such as metal. The seal member preferably prevents or reduces the infiltration of water or dirt, and moreover, possesses high sound-insulating performance for maintaining a quiet interior as well as resistance to heat and weather. A normal seal member is attached to the outer periphery of the door body and exhibits excellent sealing performance when in a compressed state interposed between the door body and the door frame. Accordingly, the seal member is usually in the form of a hollow tube composed of an elastomer that can be readily elastically deformed such that the seal member is interposed and compressed between the door body and the door frame.

Patent Document 1 discloses a configuration in which a hard core and a soft filler are inserted into the interior of a hollow tube (hollow seal part) that prevents excessive deformation. In the configuration disclosed in Patent Document 2, a columnar cushion part that is composed of a highly-foamed sponge material made from rubber or synthetic resin is provided in the interior of a hollow tube (hollow seal part). The interior of the tube is not completely filled by the columnar cushion part, two air holding spaces (sealed space parts) remaining inside the tube. In the configuration disclosed in Patent Document 3, a rubber or synthetic resin highly-foamed sponge material is provided in the interior of a hollow tube (hollow seal part). The interior of the tube is not completely filled by the highly-foamed sponge material, an air-holding space (air layer) remaining inside the tube. Further, in the configuration disclosed in Patent Document 4, a waterproof tube filled with a porous sound-absorbing material is inserted into the interior of a hollow tube (hollow seal part). These hollow tubes can be formed by the material described in, for example, Patent Document 5. Patent Document 6 discloses a manufacturing method of an open-cell foamed body.

Literature of the Prior Art

Patent Documents

Patent Document 1: JP H9-286239A
Patent Document 2: JP 2003-81026A
Patent Document 3: JP 2001-206166A
Patent Document 4: JP H2-75316U
Patent Document 5: WO2009/072503A
Patent Document 6: JP 2013-234289A

Further related prior art may be found in EP 1 452 372 A1 relating to a sealing device and US 2002/0129558 A1 relating to a sound insulating weather strip.

Summary of the Invention

Problem to be Solved by the Invention

Recent years have seen the proliferation of automobiles that take electric motors as their drive source (electric vehicles or hybrid vehicles). An electric motor produces noise of a higher frequency (approximately 2000 Hz-approximately 16,000 Hz) than a gasoline engine. This high-frequency noise is extremely unpleasant, and an improvement of the sound insulation performance over the prior art is therefore sought for the seal member of the door of a vehicle equipped with an electric motor. With the changes in the environment, there is a further trend for the greatest possible sound insulation performance in the doors of buildings as well.

When the interior of the hollow tube is completely filled with, for example, a resin as in the configuration described in Patent Document 1, the damping of vibration is limited and the sound insulation performance is poor. Weather stripping of a configuration in which a highly-foamed sponge is arranged in the interior of a hollow tube is disclosed in Patent Documents 2 and 3. Still further, the attributes of not only soundproof but also waterproof capabilities are disclosed as capabilities of the weather strip. This weather strip exhibits the desired capabilities by being deformed, and the provision of air passage holes for facilitating deformation can therefore be described as a well-known feature among those of skill in the art. As a result, there is no motive to select and use, among highly-foamed materials, a highly water-absorbent material, in particular, as a provision against the infiltration of water. In addition, in the inventions described in Patent Documents 2 and 3, the hollow seal part and highly-foamed sponge are formed by extrusion molding as a single unit and are basically composed of the same type of material (rubber or synthetic resin highly-foamed sponge). In other words, it is not assumed that the material that is provided in the interior of a hollow tube is to be freely selected from among various materials without regard to the material of the tube for the object of improving sound insulation performance.

The configuration of Patent Document 4 is of a two-layered tube construction in which a sound-absorbing material such as a glass wool is inserted inside a waterproof tube, which is then inserted into the interior of a hollow tube (hollow seal part). Accordingly, an insert member must be manufactured by filling the interior of a waterproof tube having thin film thickness with a sound-absorbent material such as glass wool, and this insert member must then be inserted into the hollow tube, with the result that the manufacturing steps are numerous and complex. In addition, the thickness of the film of the waterproof tube must be made thin so as not to detract from the sound-absorbing properties of the sound-absorbing material, and the thinner the waterproof tube, the more complex the steps for packing the sound-absorbing material. Accordingly, the invention described in Patent Document 4 encounters problems in both maintaining the sound-absorbing effect realized by the sound-absorbing material and easing the complexity of the manufacturing steps.

Furthermore, no disclosure is made in any of Patent Documents 1-4 regarding the frequency selectivity of the sound insulation performance.

Further, in addition to the resistance to heat, resistance to weather and sound insulation performance, a reduction of weight is yet another desirable attribute for a door for a vehicle or a door for a building that is to be considered as the use of a seal member. In a door for a vehicle, the reduction of weight of the entire vehicle is a crucial factor for the improvement of running performance or operability or for lower fuel consumption, and the weight of seal member cannot be ignored. In the case of a building door, moreover, a reduction of weight is to be desired to facilitate the job of installing the door and, further, the job of transporting the door to the installation site, particularly when installation is to be in a high-rise building. In Patent Documents 1-4, however, absolutely no consideration is given to the increase of weight caused by inserted members (hard core and soft filler, columnar cushion part, highly-foamed sponge material, sound-absorbing material and waterproof tube) for raising sound insulation performance.

It is therefore an object of the present invention to provide a seal member, a manufacturing method of the seal member, and a door for a building or a door for a vehicle that allow an increase of resistance to heat, resistance to weather and sound insulation performance, and further, that both facilitate manufacture and enable prevention or reduction of increase of weight.

The present invention is defined by the appended independent claims 1 and 21. The respective dependent claims describe optional features and distinct embodiments.

Effect of the Invention

According to the present invention, a seal member, a vehicle door and a building door can be realized that increase heat resistance, weather resistance and sound insulation performance, and further, that can both facilitate manufacturing and prevent or reduce increase of weight.

Brief Description of the Drawings

FIG. 1 is a front view of a door for a vehicle having the seal member of the present invention.
FIG. 2 is a front view of a door for a building having the seal member of the present invention.
FIG. 3 is a front view showing an example of the seal member of the present invention.
FIG. 4 is a sectional view of the seal member of Embodiment 1 of the present invention.
FIG. 5A is a schematic view showing an example of the acoustic characteristics measurement system.
FIG. 5B is an enlarged view showing the state of measurement of acoustic characteristics by the acoustic characteristics measurement system shown in FIG. 5A.
FIG. 6A is a graph showing an example of the acoustic characteristics measurement results realized by the acoustic characteristics measurement system shown in FIG. 5A.
FIG. 6B is a graph showing the amount of sound insulation that is found on the basis of the acoustic characteristics measurement results shown in FIG. 6A.

FIG. 7A is a sectional view of the uncompressed state of the seal member of the prior art.

FIG. 7B is a sectional view of the compressed state of the seal member of the prior art shown in FIG. 7A.

FIG. 8 is a graph showing the amount of sound insulation of the seal members of an example of the prior art and Embodiments 1-3 of the present invention.

FIG. 9 is a sectional view of the seal member of Embodiment 2 of the present invention.

FIG. 10 is a sectional view of the seal member of Embodiment 3 of the present invention.

FIG. 11 is a sectional view of the seal member of Embodiment 4 of the present invention.

FIG. 12 is a graph showing the amount of sound insulation of seal members of an example of the prior art and Embodiment 4 of the present invention.

FIG. 13 is a sectional view of the seal member of Embodiment 5 of the present invention.

FIG. 14 is a graph showing the amount of sound insulation of the seal members of an example of the prior art and Embodiments 5 to 7 of the present invention.

FIG. 15 is a sectional view of the seal member of Embodiment 6 of the present invention.

FIG. 16 is a sectional view of the seal member of Embodiment 7 of the present invention.

FIG. 17 is a sectional view of the seal member of Embodiment 8 of the present invention.

FIG. 18 is a graph showing the amount of sound insulation of seal members of an example of the prior art and Embodiments 8-9 of the present invention.

FIG. 19 is a sectional view of the seal member of Embodiment 9 of the present invention.

FIG. 20 is a sectional view of the seal member of Comparative Example 1.

FIG. 21 is a graph showing the amount of sound insulation of the seal members of an example of the prior art and Comparative Examples 1 and 2.

FIG. 22 is a sectional view of the seal member of Comparative Example 2.

FIG. 23 is a sectional view of the seal member of Comparative Example 3.

FIG. 24 is a graph showing the amount of sound insulation of the seal members of an example of the prior art and Comparative Examples 3-5.

FIG. 25 is a sectional view of the seal member of Comparative Example 4.

FIG. 26 is a sectional view of the seal member of Comparative Example 5.

FIG. 27A is a perspective view giving a schematic representation of the general configuration of the seal members of Comparative Examples 1-3 and Embodiments 1-9 of the present invention.

FIG. 27B is a perspective view giving a schematic representation of the general configuration of the seal members of Embodiments 10, 12-14, and 20 of the present invention.

FIG. 27C is a perspective view giving a schematic representation of the general configuration of the seal member of Embodiment 15 of the present invention.

FIG. 27D is a perspective view giving a schematic representation of the general configuration of the seal members of Embodiments 16 and 18 of the present invention.

FIG. 27E is a perspective view giving a schematic representation of the general configuration of the seal member of an example of the prior art.

FIG. 28 is a front view of the seal member that is a composite member that contains the seal member shown in FIGs. 27A-27E.

FIG. 29A is an explanatory view showing the step of inserting a porous body into a tube member in the seal member manufacturing method of the present invention.

FIG. 29B is a perspective view showing the tube member in a state in which the porous body has been inserted in the step shown in FIG. 29A.

FIG. 30 is a plan view of the core that is used in the seal member manufacturing method of the present invention.

FIG. 31 is a plan view showing the state in which tube members have been attached to the two end portions of the core in the seal member manufacturing method of the present invention.

FIG. 32 is a plan view showing the state in which a core in which tube members have been attached to the two end portions and that is wrapped in resin sheet is placed in the cavity of a die in the seal member manufacturing method of the present invention.

FIG. 33 is a front view giving a schematic representation of the state in which heat and pressure are applied by a press in the seal member manufacturing method of the present invention.

FIG. 34 is a plan view showing the state in which a joint is formed around the outer circumference of the core in the seal member manufacturing method of the present invention.

FIG. 35 is a perspective view giving a schematic representation of the step of extracting the core in the seal member manufacturing method of the present invention.

FIG. 36 is a plan view showing a seal member that has been manufactured by the seal member manufacturing method of the present invention.

FIG. 37 is a plan view showing the state in which a core in which tube members have been attached to the two end portions is placed in the cavity of a die in another example of the seal member manufacturing method of the present invention.

FIG. 38 is a sectional view of the principal parts of the seal member shown in FIG. 36.

Embodiments of the Invention

Embodiments of the present invention are next described.

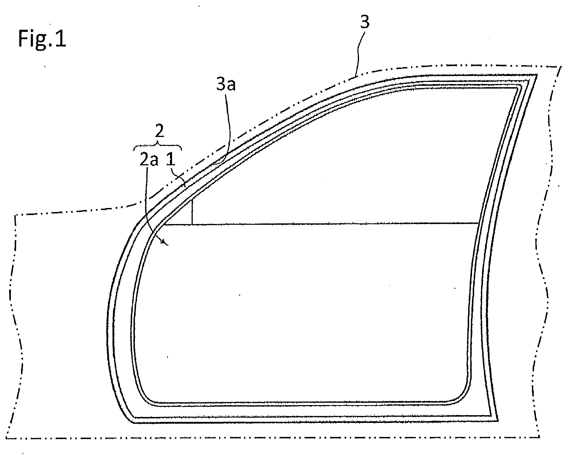

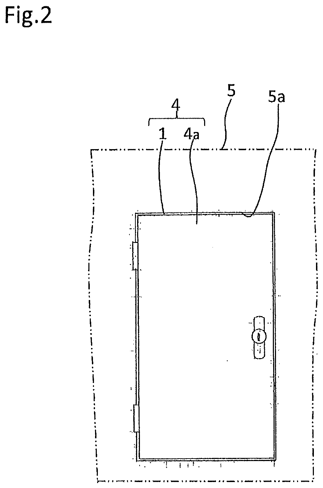

Seal member 1 of the present invention is chiefly used in vehicle door 2 shown in FIG. 1 or building door 4 shown in FIG. 2. More specifically, seal member 1 is attached to, for example, the outer peripheral edge portion of vehicle door body 2a of vehicle door 2 shown in FIG. 1 and is used in a compressed state interposed between vehicle door body 2a and door frame 3a of vehicle body 3, the key parts of which are schematically represented by the two-dot chain line. Alternatively, seal member 1 is attached to the outer peripheral edge portion of building door body 4a of building door 4 shown in FIG. 2 and is in some cases used in a compressed state interposed between building door body 4a and door frame 5a of skeleton 5, the key parts of which are schematically represented by a two-dot chain line. Although described hereinbelow chiefly taking as an example seal member 1 that is used in vehicle door 2 shown in FIG. 1, the following description also substantially applies to seal member 1 that is used in building door 4.

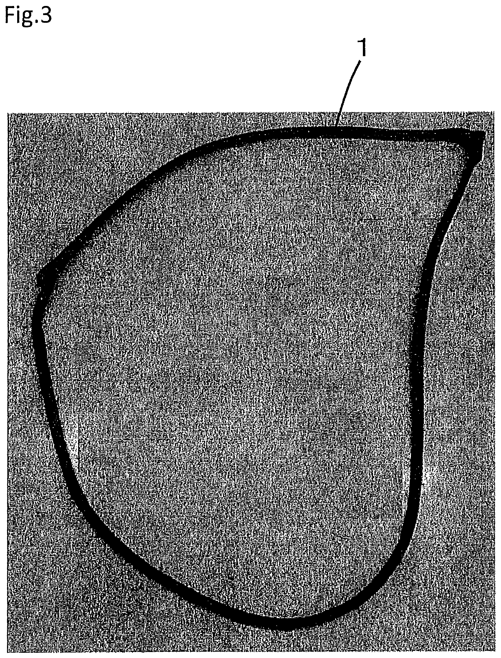

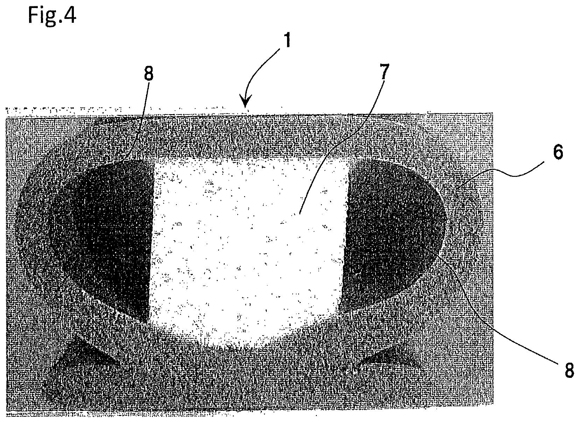

As shown in FIGs. 3 and 4, seal member 1 of the present invention has hollow tube 6 and porous body 7 that is arranged in the interior of tube 6. Tube 6 is composed of an elastically deformable elastomer and is attached so as to closely adhere to the outer peripheral edge portion of vehicle door body 2a shown in FIG. 1. Tube 6 has a hollow portion that in its initial state (uncompressed state) has a substantially round profile shape with an inside diameter on the order of 5-25 mm. Although tube 6 is shown with a comparatively simple shape in FIGs. 3 and 4, tube 6 may also have a shape in which engagement members or mounting members are further provided for attachment to vehicle door body 2a. An example of the elastomer that makes up tube 6 is an ethylene $\alpha$-olefin nonconjugated polyene copolymer, whose specific gravity is at least 0.3 and no greater than 1.0 in the uncompressed state and whose water absorption coefficient is less than 50%. However, the present invention is not limited to this example, tube 6 of other materials also being usable and the specific gravity and water absorption coefficient may also differ from the above-described example. The measurement of the water absorption coefficient is carried out as described below. Essentially, a test piece measuring 20 mm $\times$ 20 mm is punched out from a processed article of tube shape and this test piece is decompressed to -635 mmHg at a position 50 mm below the water surface and held for three minutes. The test piece is then returned to atmospheric pressure, and after the passage of three minutes the weight of the test piece that has absorbed water is measured. The water absorption coefficient of the test piece is then calculated from the following formula:

$$\text{Water absorption coefficient } [\%] = \{(W2 - W1) / W1\} \times 100$$

W1: Weight (g) of the test piece before dipping
W2: Weight (g) of the test piece after dipping

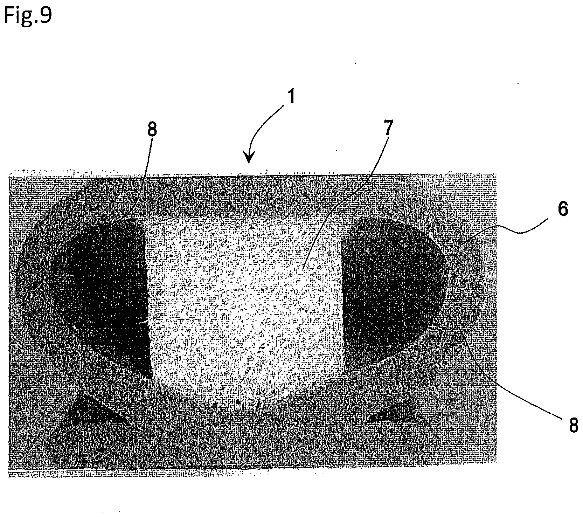

As shown in FIG. 4, in seal member 1 of the present invention, porous body 7 is inserted in the interior (hollow portion) of tube 6. However, the interior of tube 6 is not completely filled by porous body 7, and air-holding space 8 is provided between a portion of the inner wall of tube 6 and a portion of the outer surface of porous body 7. In other words, air-holding space 8 in the present application refers to space enclosed by the inner wall (the surface that forms the interior space) of hollow tube 6 and the outer surface of porous body 7 (not including the micro-pores of the surface of porous body 7). More specifically, as clearly shown in FIG. 9, air-holding space 8 is a space that is at least larger than the micro-pores of porous body. For example, the maximum width of air-holding space 8 (the maximum value of the gap between the inner wall of tube 6 and the outer surface of porous body 7 in a direction that is orthogonal to each portion of the outer surface of porous body 7) is equal to or greater than 1 mm, more preferably equal to or greater than 5 mm, and still more preferably equal to or greater than 8 mm. The proportion of the portion that is occupied by air-holding space 8 inside tube 6 can be represented by the proportion of the area of porous body 7. This numerical value refers to, when observing a section of sites that contain hollow tube 6 and porous body 7, the area that is occupied by the portion that pertains to porous body 7. The proportion of the area of porous body 7 inside tube 6 is preferably within the range of at least 5% and no greater than 95%, and in the configuration shown in FIG. 9, the proportion of the area of porous body 7 inside tube 6 is clearly within the range of at least 5% but no greater than 95%. Further, the more preferable minimum value of the proportion of the area of porous body 7 inside tube 6 is 8%, and the still more preferable minimum value is 15%. On the other hand, the more preferable maximum value is 90%, and the still more preferable maximum value is 85%. Porous body 7 in the present application is not limited to a form such as a foamed body and may also be a substance of a configuration having a measurable water absorption coefficient. More specifically, porous body 7 may also be a form that contains uniform micro-spaces such as a nonwoven fabric, for example, a form of an aggregate of fibers.

Air-holding space 8 is maintained without being eliminated even in the compressed state when interposed between door body 2a and door frame 4 during the use of seal member 1. The cross section of compressed porous body 7 of a section that is orthogonal to the longitudinal direction of tube 6 in the state of use of seal member 1 (for example, a 30%-compressed state, i.e., a compressed state in which the dimension in the direction of compression is decreased by 30%) is at least 5% and no greater than 90% of the cross section of the hollow portion (including the portion occupied by porous body 7 inside tube 6) that is the portion enclosed by the inner wall of tube 6. In other words, the area of air-holding space 8 in the state in which seal member 1 is used is at least 10% and no greater than 95% of the cross section of the portion that is enclosed by the inner wall of tube 6. When porous body 7 is inserted along the entire length of tube 6, the volume occupancy of porous body 7 inside the hollow portion of tube 6 is at least 5% and not greater than 90% if the ratio of the cross section of porous body 7 with respect to the cross section of the hollow portion of tube 6 is at least 5% and no greater than 90%. However, porous body 7 need not necessarily be inserted along the entire length of tube 6, and the effect of improving sound insulation properties is obtained even when porous body 7 is arranged in only a portion of the longitudinal direction of the hollow portion of tube 6. The volume occupancy and sound insulation performance for such cases will be described hereinbelow.

Examples of the material of porous body 7 include materials such as foamed rubber, nonwoven fabric, and polyurethane foam. Regardless of which material is used, the material that forms porous body 7 preferably has a water absorption coefficient of at least 10% and no greater than 3000% in the uncompressed state. The maximum value of the water absorption coefficient is more preferably 2800%, still more preferably 2500%, even more preferably 2000%, and particularly preferably 1600%. On the other hand, the minimum value of the water absorption coefficient is more preferably 12%, and still more preferably 13%. The water absorption coefficient of the material that makes up porous body 7 is measured by the same method as for the elastomer material that makes up tube 6 described hereinabove. At this time, by using test pieces that are formed such that the surface area of each is 4000 mm$^2$, the water absorption coefficient is measured under substantially the same conditions even when the shape of each test piece differs. In addition, the bulk density of the material that makes up porous body 7 in the uncompressed state is at least 10 kg/m$^3$ and no greater than 150 kg/m$^3$. Still further, the material that makes up porous body 7 has compression stress of no greater than 1 N/cm$^2$ for compression for which the dimension in the direction of compression decreases by 25% (25% compression stress) and compression stress of no greater than 2.5 N/cm$^2$ for compression for which the dimension in the direction of compression decreases by 50% (50% compression stress).

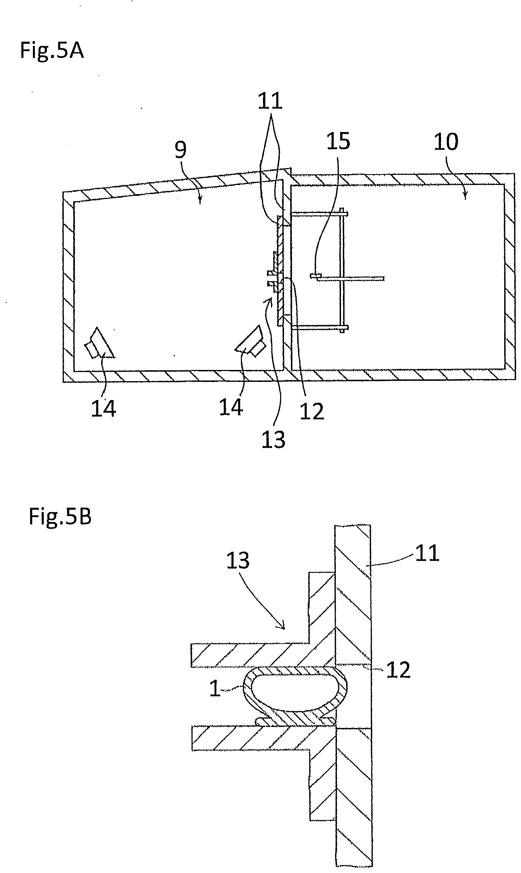

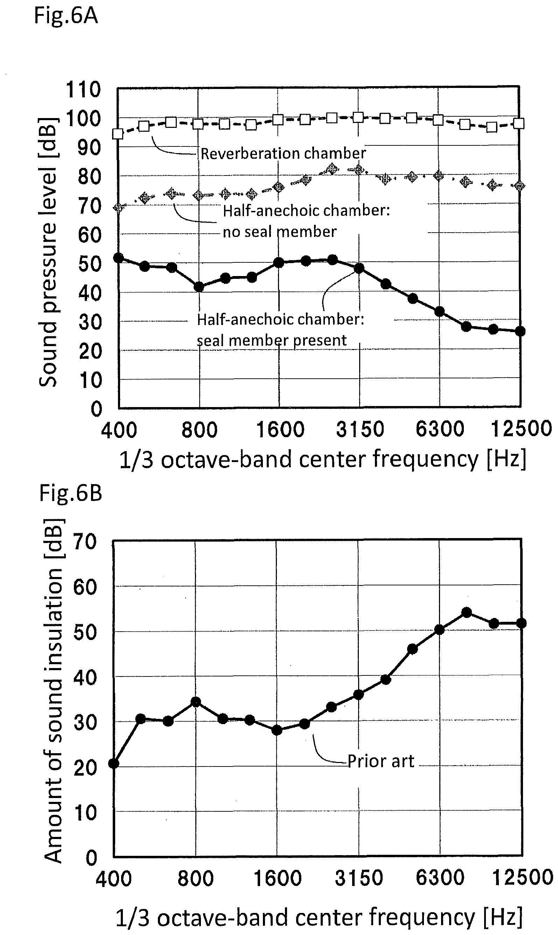

The sound insulation performance of seal member 1 can be measured by the acoustic characteristics measurement system shown in, for example, FIGs. 5A and 5B. This acoustic characteristic measurement system has two chambers, i.e., reverberation chamber 9 that is the first chamber and half-anechoic chamber 10 or anechoic chamber that is the second chamber. Reverberation chamber 9 and half-anechoic chamber 10 are adjacent and share a portion of the wall (partition wall part 11). The interior walls of reverberation chamber 9 are constituted by resonant boards such as metal plates. The inner walls other than the floor surface of half-anechoic chamber 10 are of a sound absorbing construction (a construction in which sound absorbing members (not shown) are provided over substantially the entirety of the inner walls). A chamber in which all of the inner walls including the floor surface are of a sound-absorbing construction is referred to as an anechoic chamber. The second chamber of the present invention may be half-anechoic chamber 10 or an anechoic chamber. Opening 12 that communicates between reverberation chamber 9 and half-anechoic chamber 10 is provided in partition wall part 11, and retaining mechanism 13 that holds test piece (seal member 1 in this example) while compressing the test piece as shown in FIG. 5B is provided to face this opening 12. Sound is produced from speaker 14 in reverberation chamber 9 while seal member 1 is held, as is, in a compressed state. An example of the sound that is produced has a fixed sound pressure level (approximately 100 dB) over all frequencies equal to and greater than 400 Hz, as shown in FIG. 6A. The amount of sound insulation is then calculated from the following formula on the basis of sound pressure level SPL0 of sound that is recorded by microphone 15 of half-anechoic chamber 10 when seal member 1 is not provided and sound pressure level SPL1 of sound that is recorded by microphone 15 of half-anechoic chamber 10 when seal member 1 is provided (see FIG. 6B).

$$\text{Amount of sound insulation [dB]} = \text{SPL0 [dB]} - \text{SPL1 [dB]}$$

In FIG. 6A, the case that is indicated as "seal member present" is the result of measuring the sound insulation property in a state in which a seal member of a prior-art example (to be described), i.e., a seal member of a configuration in which nothing is inserted in the interior of hollow tube 6, is held by retaining mechanism 13.

Here, the sound insulation performance of seal member 1 can be represented by an average decibel value of the amount of sound insulation of a specific frequency range (for example, 4000 Hz-10000 Hz). The amount of improvement of sound insulation realized by the present invention can be shown by calculating the average decibel value of the amount of sound insulation of a specific frequency range of seal member 1 of the present invention and comparing with the average decibel value of the amount of sound insulation for the same frequency range of the seal member of the prior art having a configuration in which nothing is inserted in the interior of hollow tube 6. The sound insulation effect of each seal member is determined in four levels as next shown on the basis of the amount of improvement of sound insulation with respect to a seal member that is taken as a reference and is represented in Tables 1-3 that are to be described. ⊙: 6 dB or more; ○: 2 dB or more and less than 6 dB; Δ: 1 dB or more and less than 2 dB; ✕: less than 1 dB

Embodiments

The results of measuring the sound insulation effects of each of seal member 1 of the present invention that uses porous body 7 composed of various materials, the seal member of the prior-art example, and comparative examples are described below. In all of the following examples, tube 6 that was manufactured in conformity with Patent Document 5 is composed of an ethylene α-olefin nonconjugated polyene copolymer, whose water absorption coefficient is 0.49% in an uncompressed state and whose specific gravity is 0.62 in an uncompressed state. The tube has a shape in which mounting members are provided on a cylinder having an outside diameter of 19-22 mm and an inside diameter of 15-16 mm in the uncompressed state, and the entire length of the tube is 840 mm. At the time of measurement, the seal member is held in a 30% compressed state as mentioned above and the acoustic characteristics measurement system shown in, for example, FIGs. 5A and 5B is used.

Prior Art Example

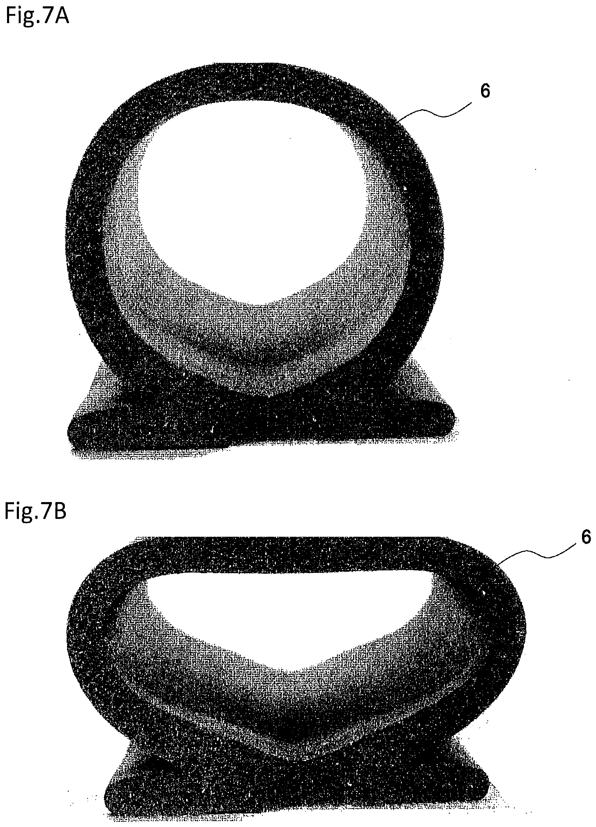

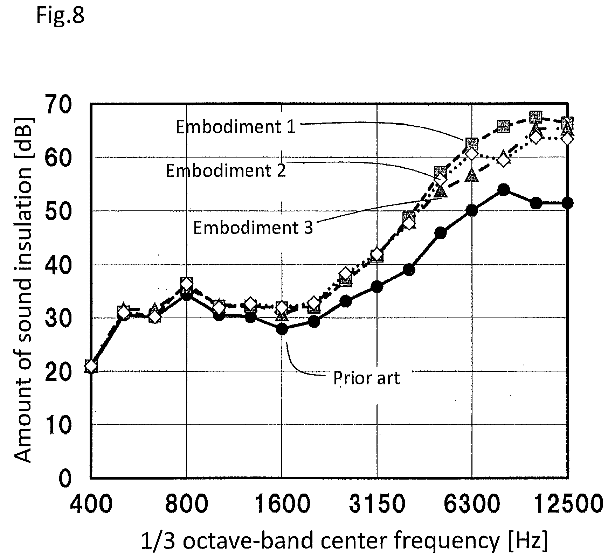

Before describing seal member 1 of the present invention, the sound insulation effect will be described for a seal member of the prior art that is made up of only tube 6 and that does not have porous body 7 as shown in FIGs. 7A and 7B. FIG. 7A shows the uncompressed state, and FIG. 7B shows the 30% compressed state (state of use). The amount of sound insulation for sound of various frequencies realized by the seal member that does not have a porous body is shown in Table 1, Table 2, and FIGs. 8, 12, 14, 18, 21, and 24. An examination of these effects reveals that the amount of sound insulation realized by the prior-art example is insufficient, particularly for high frequencies of 2000 Hz or higher, the average decibel value of the amount of sound insulation being 50.7 dB for the range 4000 Hz-10000 Hz.

[TABLE 1]

"-": unmeasurable

| | Porous Body | 4000-10000Hz Improvement Amount [dB] | Sound Insulation Effect | Seal Member Weight [g] | Tube Length [mm] | Physical Properties of Porous Body | | | | | |
|---|---|---|---|---|---|---|---|---|---|---|---|
| | | | | | | Bulk Density [kg/m³] | Water Absorption Coefficient [%] | 25% Compression Stress [N/cm²] | 50% Compression Stress [N/cm²] | Porous Body Length [mm] | Porous Body Volume Occupancy [%] |
| Prior Art Example | Absent | Reference | Reference | 81.4 | 840 | | | | | | |
| Embodiment 1 | Polyurethane Foam | 12.7 | ⊙ | 85.4 | 840 | 45 | 1400 | 0.52 | 0.72 | 840 | 60 |
| Embodiment 2 | | 9.8 | ⊙ | 83.4 | 840 | 22 | 2742 | 0.33 | 0.35 | 840 | 60 |
| Embodiment 3 | | 9.9 | ⊙ | 83.3 | 840 | 25 | 2310 | 0.48 | 0.5 | 840 | 60 |
| Embodiment 4 | (Injection: Gap Present) | 10.7 | ⊙ | 98.0 | 840 | 60 | 665 | 0.12 | 0.18 | 840 | 89 |
| Embodiment 5 | Nonwoven Fabric | 12.4 | ⊙ | 84.2 | 840 | 31 | 16 | - | 0.09 | 840 | 40 |
| Embodiment 6 | | 9.1 | ⊙ | 83.4 | 840 | 31 | 16 | - | 0.09 | 840 | 9 |
| Embodiment 7 | | 9.8 | ⊙ | 86.1 | 840 | 70 | 203 | 0.16 | 2.2 | 840 | 55 |
| Embodiment 8 | Foamed Rubber | 12.0 | ⊙ | 90.1 | 840 | 140 | 169 | 0.26 | 0.54 | 840 | 60 |
| Embodiment 9 | | 14.4 | ⊙ | 90.1 | 840 | 73 | 46.8 | 0.06 | 0.1 | 840 | 80 |
| Comparative Example 1 | | 0.5 | × | 103 | 840 | 290 | 0.8 | 4.40 | 13.1 | 840 | 65 |
| Comparative Example 2 | | -2.0 | × | 108 | 840 | 310 | 1.6 | 5.19 | 13.2 | 840 | 66 |
| Comparative Example 3 | Polyurethane Foam (Injection: No gaps) | -3.9 | × | 104 | 840 | 56 | 1268 | 0.54 | 0.8 | 840 | 100 |
| Comparative Example 4 | (Outside Tube) | 0.4 | × | 83.4 | 840 | 25 | 2310 | 0.48 | 0.5 | 840 | 0 |
| Comparative Example 5 | (Outside Tube) | 0.4 | × | 83.4 | 840 | 25 | 2310 | 0.48 | 0.5 | 840 | 0 |

Embodiment 1

Seal member 1 of Embodiment 1 of the present invention is next described. This seal member 1 is the example shown in FIG. 4 and has porous body 7 that has a square cross-sectional shape measuring 10 mm $\times$ 10 mm inserted in the interior of tube 6. The material that makes up this porous body 7 is polyurethane foam (Trade Name: SEALFLEX ESH (made by INOAC Corporation)) whose water absorption coefficient is 1400% in the uncompressed state and whose bulk density in the uncompressed state is 45 kg/m$^3$. In addition, this material has 25% compression stress of 0.52 N/cm$^2$ and 50% compression stress of 0.72 N/cm$^2$. The cross-sectional area of porous body 7 in the state where seal member 1 is used at a section that is orthogonal to the longitudinal direction of tube 6 is 60% of the cross-sectional area of the hollow portion (internal space) of tube 6, and porous body 7 is arranged along the entire length of tube 6, and therefore, the volume occupancy of porous body 7 with respect to the internal volume of tube 6 is 60%. The amount of sound insulation for sound of various frequencies in the state where seal member 1 is used in which porous body 7 that is composed of this material is inserted inside tube 6, is shown in Table 1 and FIG. 8. The sound insulation property of this seal member 1 is excellent, the amount of sound insulation for high frequencies of 2000 Hz and higher in particular being markedly improved over the prior-art example, and the average decibel value of the amount of sound insulation for 4000 Hz-10000 Hz is improved by 12.7 dB over the prior-art example.

Embodiment 2

In seal member 1 of Embodiment 2 of the present invention shown in FIG. 9, porous body 7, in which the cross-sectional shape is a square measuring 10 mm $\times$ 10 mm, is inserted in the interior of tube 6. The material that makes up this porous body 7 is polyurethane foam (Trade Name: COLORFOAM ECS (made by INOAC Corporation)) for which the water absorption coefficient is 2742% in the uncompressed state and the bulk density is 22 kg/m$^3$ in the uncompressed state. In addition, this material has 25% compression stress of 0.33 N/cm$^2$ and 50% compression stress of 0.35 N/cm$^2$. The cross-sectional area of porous body 7 in the state where seal member 1 is used is 60% of the cross-sectional area of the hollow portion of tube 6, and porous body 7 is arranged along the entire length of tube 6, and therefore, the volume occupancy of porous body 7 with respect to the internal volume of tube 6 is 60%. The amount of sound insulation for sound of various frequencies in the state where this seal member 1 is used is shown in Table 1 and FIG. 8. The sound insulation performance of this seal member 1 is excellent compared to the prior-art example, and the average decibel value of the amount of sound insulation at 4000 Hz-10000 Hz is improved by 9.8 dB over the prior-art example.

Embodiment 3

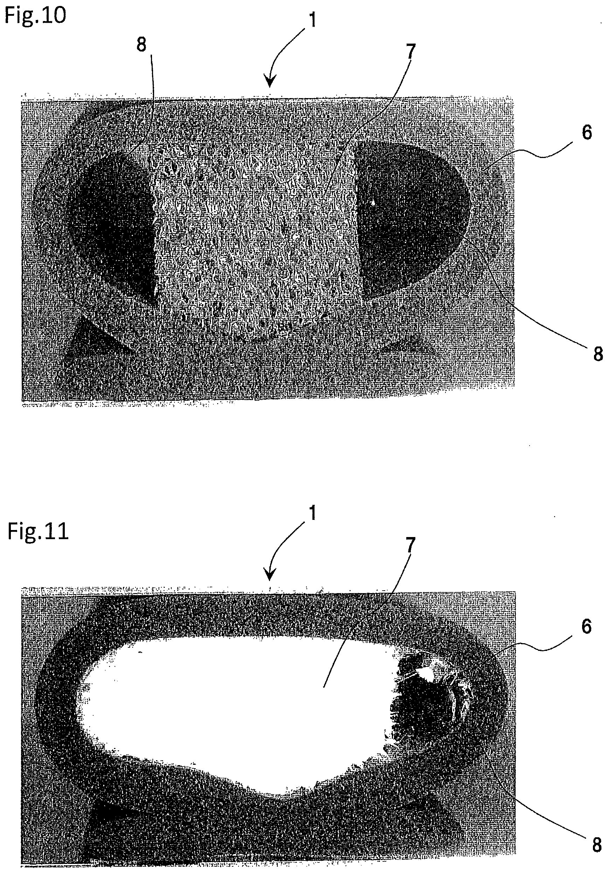

In seal member 1 of Embodiment 3 of the present invention shown in FIG. 10, porous body 7, in which the cross-sectional shape is a square measuring 10 mm $\times$ 10 mm, is inserted in the interior of tube 6. The material that makes up this porous body 7 is polyurethane foam (Trade Name: CALMFLEX F-2 (made by INOAC Corporation)) for which the water absorption coefficient is 2310% in the uncompressed state and the bulk density is 25 kg/m$^3$ in the uncompressed state. In addition, this material has 25% compression stress of 0.48 N/cm$^2$, and 50% compression stress of 0.5 N/cm$^2$. The cross-sectional area of porous body 7 in the state where seal member 1 is used is 60% of the cross-sectional area of the hollow portion of tube 6, and porous body 7 is arranged along the entire length of tube 6, and therefore, the volume occupancy of porous body 7 with respect to the internal volume of tube 6 is 60%. The amount of sound insulation for sounds of various frequencies in the state where this seal member 1 is used is shown in Table 1 and FIG. 8. The sound insulation performance of this seal member 1 is excellent compared to the prior-art example, and the average decibel value of the amount of sound insulation at 4000 Hz-10000 Hz is improved by 9.9 dB over the prior-art example.

Embodiment 4

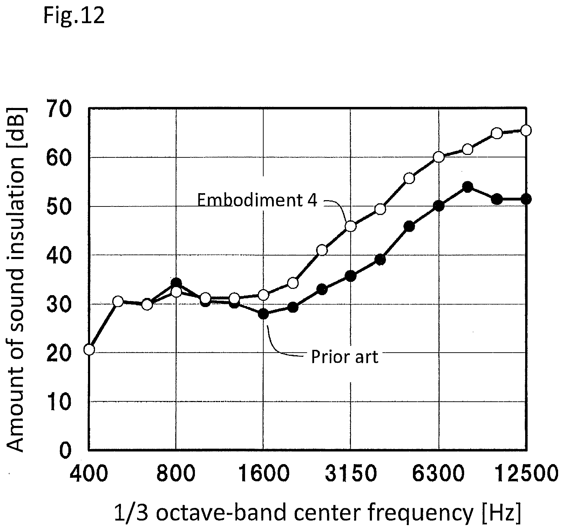

In seal member 1 of Embodiment 4 of the present invention shown in FIG. 11, porous body 7 that is composed of a soft polyurethane foam is packed in the interior of tube 6. This porous body 7 is a substance formed as a nonfluid solid shape polyurethane foam by injecting a material that is in a fluid state before foam reaction, into the interior of tube 6 and then performing foam reaction of the material. The interior of tube 6 is not completely filled by porous body 7 and air-holding space 8 is present between a portion of the inner wall of tube 6 and a portion of the outer surface of porous body 7. The water absorption coefficient of this polyurethane foam that makes up this porous body 7 after foaming is 665% in the uncompressed state and the bulk density is 60 kg/m$^3$ in the uncompressed state. In addition, this material has 25% compression stress of 0.12 N/cm$^2$, and 50% compression stress of 0.18 N/cm$^2$. The cross-sectional area of porous body 7 in the state where seal member 1 is used is 89% of the cross-sectional area of the hollow portion of tube 6, and porous body 7 is arranged along the entire length of tube 6, and therefore, the volume occupancy of porous body 7 with respect to the internal volume of tube 6 is 89%. The amount of sound insulation for sounds of various frequencies in the state where this seal member 1 is used is shown in Table 1 and FIG. 12. This seal member 1 obtains excellent sound insulation performance compared to the prior-art example, and the average decibel value of the amount of sound insulation at 4000 Hz-10000 Hz is improved by 10.7 dB over the prior-art example.

Embodiment 5

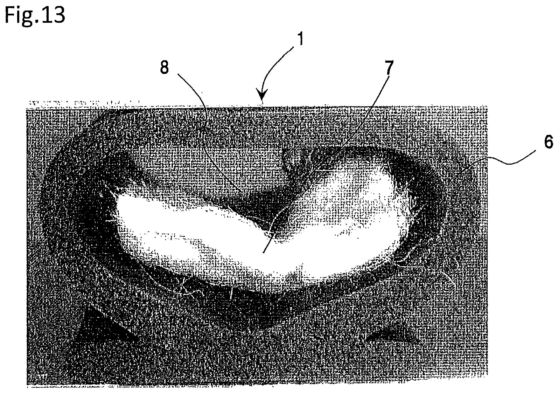

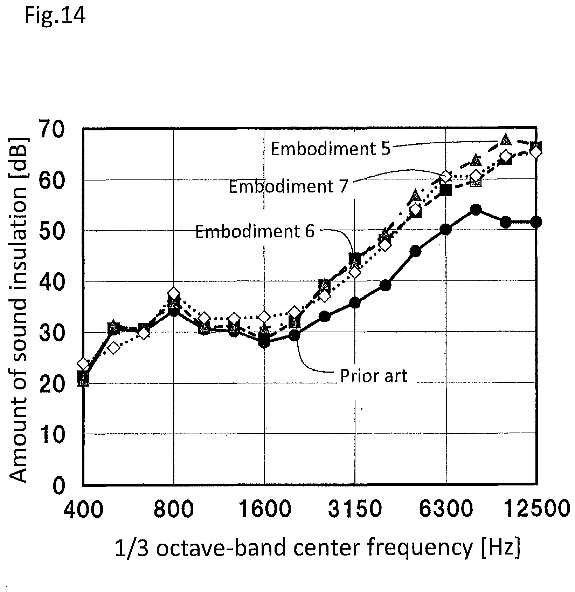

In seal member 1 of Embodiment 5 of the present invention shown in FIG. 13, porous body 7, in which the cross-sectional shape measures 2 mm $\times$ 20 mm, is inserted in the interior of tube 6. The material that makes up this porous body 7 is a nonwoven fabric fabricated by processing polypropylene by a melt-blown method, this material having a water absorption coefficient of 16% in the uncompressed state and a bulk density of 31 kg/m$^3$ in the uncompressed state. In addition, this material has 25% compression stress below the limit of measurement (not measurable), and 50% compression stress of 0.09 N/cm$^2$. The cross-sectional area of porous body 7 in the state where seal member 1 is used is 40% of the cross-sectional area of the hollow portion of tube 6, and porous body 7 is arranged along the entire length of tube 6, and therefore, the volume occupancy of porous body 7 with respect to the internal volume of tube 6 is 40%. The amount of sound insulation for sounds of various frequencies in the state where this seal member 1 is used is shown in Table 1 and FIG. 14. The sound insulation performance of this seal member 1 is excellent, the amount of sound insulation for high frequencies of 2000 Hz and higher being particularly improved over the prior-art example, and the average decibel value of the amount of sound insulation at 4000 Hz-10000 Hz is improved by 12.4 dB over the prior-art example.

Embodiment 6

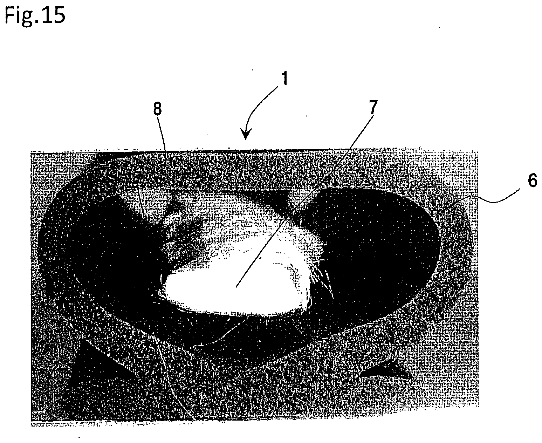

In seal member 1 of Embodiment 6 of the present invention shown in FIG. 15, porous body 7, in which the cross-sectional shape measures 2 mm $\times$ 6.5 mm, is inserted in the interior of tube 6. The material that makes up this porous body 7 is a nonwoven fabric identical to Embodiment 5. The cross-sectional area of porous body 7 in the state where seal member 1 is used is 9% of the cross-sectional area of the hollow portion of tube 6, and porous body 7 is arranged along the entire length of tube 6, and therefore, the volume occupancy of porous body 7 with respect to the internal volume of tube 6 is 9%. The amount of sound insulation for sounds of various frequencies in the state where this seal member 1 is used is shown in Table 1 and FIG. 14. The sound insulation performance of this seal member 1 is excellent compared to the prior-art example, and the average decibel value of the amount of sound insulation at 4000 Hz-10000 Hz is improved by 9.1 dB over the prior-art example.

Embodiment 7

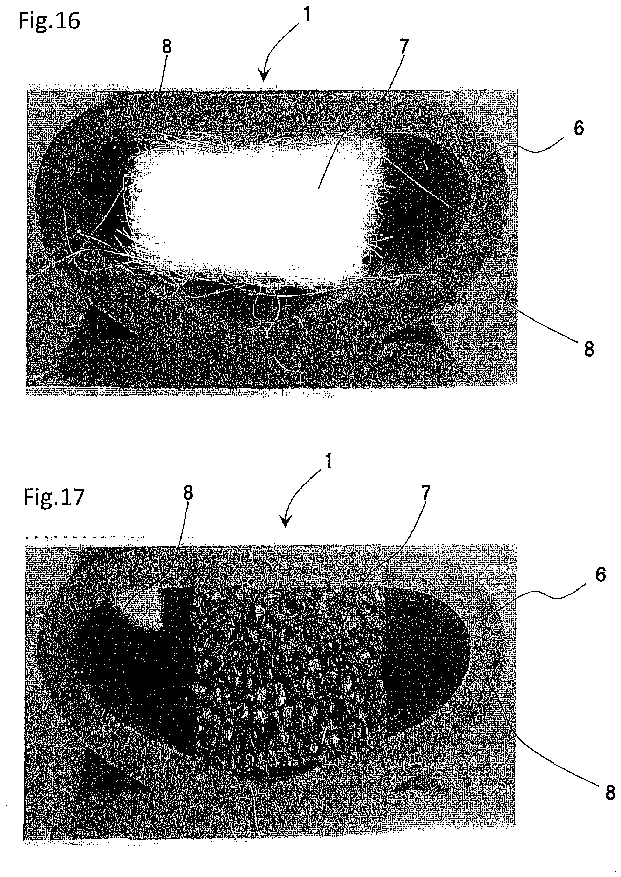

In seal member 1 of Embodiment 7 of the present invention shown in FIG. 16, porous body 7 in which the cross-sectional shape measures 8 mm $\times$ 13 mm, is inserted in the interior of tube 6. The material that makes up this porous body 7 is a nonwoven fabric (Trade Name: Tafnel ® Oil Blotter AR-65 (made by Mitsui Chemicals, Inc.)) having a water absorption coefficient of 203% in the uncompressed state and a bulk density of 70 kg/m$^3$ in the uncompressed state. In addition, this material has 25% compression stress of 0.16 N/cm$^2$, and 50% compression stress of 2.2 N/cm$^2$. The cross-sectional area of porous body 7 in the state where seal member 1 is used is 55% of the cross-sectional area of the hollow portion of tube 6, and porous body 7 is arranged along the entire length of tube 6, and therefore, the volume occupancy of porous body 7 with respect to the internal volume of tube 6 is 55%. The amount of sound insulation for sounds of various frequencies in the state where this seal member 1 is used is shown in Table 1 and FIG. 14. The sound insulation performance of this seal member 1 is excellent compared to the prior-art example, and the average decibel value of the amount of sound insulation at 4000 Hz-10000 Hz is improved by 9.8 dB over the prior-art example.

Embodiment 8

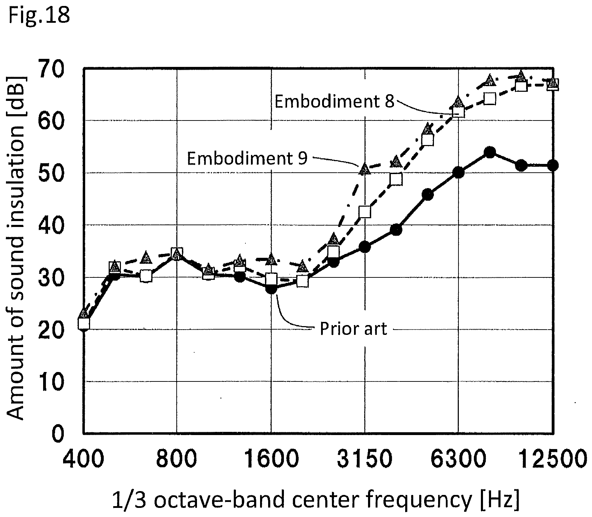

In seal member 1 of Embodiment 8 of the present invention shown in FIG. 17, porous body 7, in which the cross-sectional shape is a square measuring 10 mm $\times$ 10 mm, is inserted in the interior of tube 6. The material that makes up this porous body 7 is a foamed rubber (Trade Name: EPTSEALER No. 685 (made by Nitto Denko Corporation)) having a water absorption coefficient of 169% in the uncompressed state and a bulk density of 140 kg/m$^3$ in the uncompressed state. In addition, this material has 25% compression stress of 0.26 N/cm$^2$ and 50% compression stress of 0.54 N/cm$^2$. The cross-sectional area of porous body 7 in the state where seal member 1 is used is 60% of the cross-sectional area of the hollow portion of tube 6, and porous body 7 is arranged along the entire length of tube 6, and therefore, the volume occupancy of porous body 7 with respect to the internal volume of tube 6 is 60%. The amount of sound insulation for sounds of various frequencies in the state where this seal member 1 is used is shown in Table 1 and FIG. 18. The sound insulation performance of this seal member 1 is excellent compared to the prior-art example, and the average decibel value of the amount of sound insulation at 4000 Hz-10000 Hz is improved by 12.0 dB over the prior-art example.

Embodiment 9

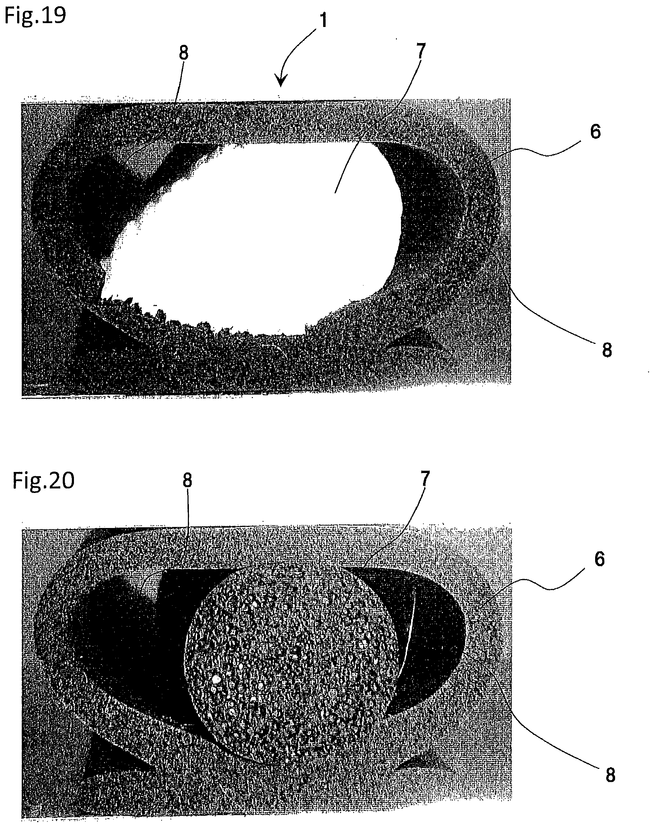

In seal member 1 of Embodiment 9 of the present invention shown in FIG. 19, porous body 7, in which the cross-sectional shape is a rectangle measuring 10 mm $\times$ 15 mm, is inserted in the interior of tube 6. The material that makes up this porous body 7 is a foamed rubber (EPT sponge (EPDM sponge)) that conforms to Patent Document 6, the amount of foaming agent being adjusted such that the water absorption coefficient becomes 46.8% in the uncompressed state and the bulk density becomes 73 kg/m$^3$ in the uncompressed state. In addition, this material has 25% compression stress of 0.06 N/cm$^2$ and 50% compression stress of 0.1 N/cm$^2$. The cross-sectional area of porous body 7 in the state where seal member 1 is used is 80% of the cross-sectional area of the hollow portion of tube 6, and porous body 7 is arranged along the entire length of tube 6, and therefore, the volume occupancy of porous body 7 with respect to the internal volume of tube 6 is 80%. The amount of sound insulation for sounds of various frequencies in the state where this seal member 1 is used is shown in Table 1 and FIG. 18. The sound insulation performance of this seal member 1 is excellent, the amount of sound insulation being particularly improved compared to the prior-art example for high frequencies of 2000 Hz and higher, and the average decibel value of the amount of sound insulation at 4000 Hz-10000 Hz is improved by 14.4 dB over the prior-art example.

Comparative examples are next described for comparison with Embodiments 1-9 of the present invention.

Comparative Example 1

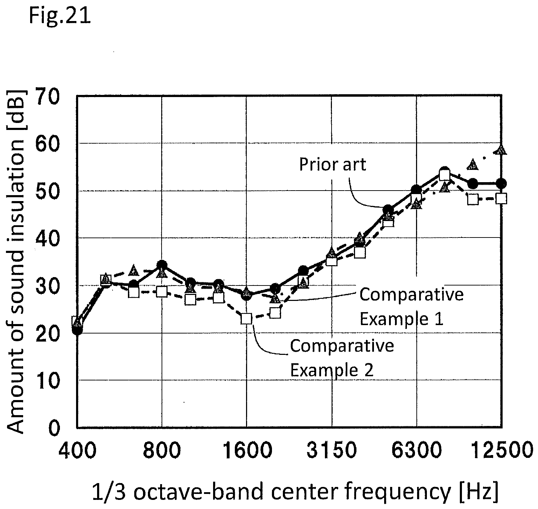

In the seal member of Comparative Example 1 shown in FIG. 20, porous body 7, in which the cross-sectional shape is a circle 10 mm in diameter, is inserted in the interior of tube 6. The material that makes up this porous body 7 is foamed rubber (EPT sponge (EPDM sponge)) that conforms to Patent Document 6, the amount of foaming agent being adjusted such that the water absorption coefficient becomes 0.8% in the uncompressed state and the bulk density becomes 290 kg/m$^3$ in the uncompressed state. In addition, this material has 25% compression stress of 4.4 N/cm$^2$ and 50% compression stress of 13.1 N/cm$^2$. The cross-sectional area of porous body 7 in the state where the seal member is used is 65% of the cross-sectional area of the hollow portion of tube 6, and porous body 7 is arranged along the entire length of tube 6, and therefore, the volume occupancy of porous body 7 with respect to the internal volume of tube 6 is 65%. The amount of sound insulation for sounds of various frequencies in the state where this seal member is used is shown in Table 1 and FIG. 21. This seal member obtains only the same level of sound insulation performance of the seal member of the prior-art example, and compared to seal member 1 of Embodiments 1-9, the amount of sound insulation is insufficient, particularly for high frequencies of 2000 Hz and higher, and the average decibel value of the amount of sound insulation at 4000 Hz-10000 Hz is improved by only 0.5 dB over the prior-art example.

Comparative Example 2

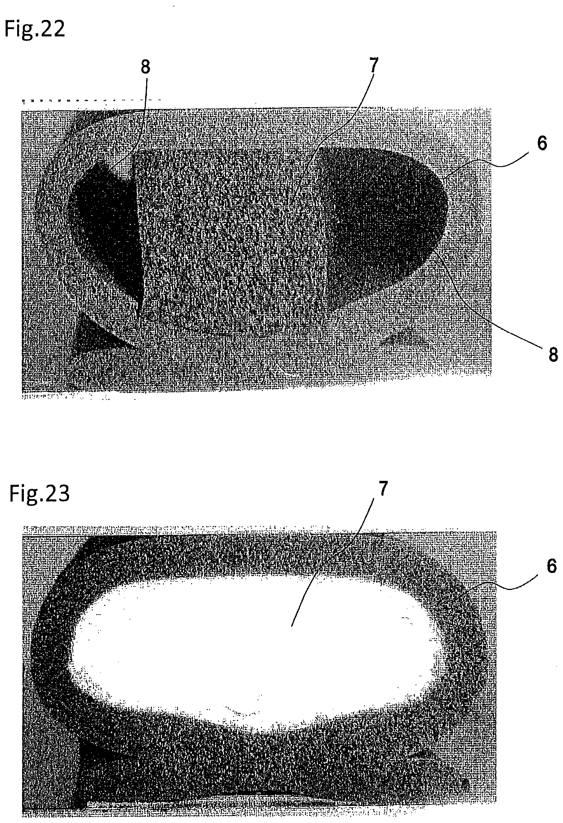

In the seal member of Comparative Example 2 shown in FIG. 22, porous body 7, in which the cross-sectional shape is a square measuring 10 mm $\times$ 10 mm, is inserted in the interior of tube 6. The material that makes up this porous body 7 is foamed rubber (CR (Chloroprene Rubber) sponge square cord), and the water absorption coefficient is 1.6% in the uncompressed state and the bulk density is 310 kg/m$^3$ in the uncompressed state. In addition, this material has 25% compression stress of 5.19 N/cm$^2$ and 50% compression stress of 13.2 N/cm$^2$. The cross-sectional area of porous body 7 in the state where the seal member is used is 66% of the cross-sectional area of the hollow portion of tube 6, and porous body 7 is arranged along the entire length of tube 6, and therefore, the volume occupancy of porous body 7 with respect to the internal volume of tube 6 is 66%. The amount of sound insulation for sounds of various frequencies in the state where this seal member is used is shown in Table 1 and FIG. 21. This seal member obtains only the same level of sound insulation performance of the seal member of the prior-art example, and compared to seal members 1 of Embodiments 1-9, the amount of sound insulation is insufficient, particularly for high frequencies of 2000 Hz and higher, and the average decibel value of the amount of sound insulation at 4000 Hz-10000 Hz is decreased by 2.0 dB compared to the prior-art example.

Comparative Example 3

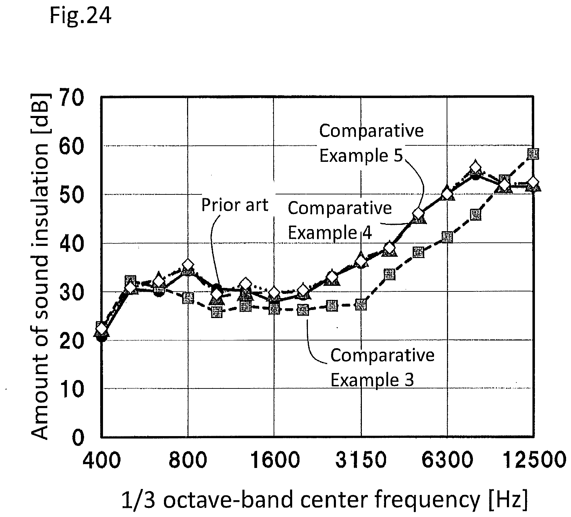

In seal member 1 of Comparative Example 3 shown in FIG. 23, porous body 7 that is composed of a soft polyurethane foam is packed without gaps in the interior of tube 6. In other words, this porous body 7 is a substance in which a material that is in a fluid state before foam reaction is injected into the interior of tube 6 and then foam reaction is performed to form a nonfluid solid polyurethane foam. The interior of tube 6 is completely filled by porous body 7, and air-holding space 8 is not present between the inner wall of tube 6 and the outer surface of porous body 7. The water absorption coefficient in the uncompressed state of this polyurethane foam that makes up this porous body 7 after foaming is 1268%, and the bulk density in the uncompressed state is 56 kg/m$^3$. In addition, this material has 25% compression stress of 0.54 N/cm$^2$ and 50% compression stress of 0.8 N/cm$^2$. The cross-sectional area of porous body 7 in the state where seal member 1 is used is 100% of the cross-sectional area of the hollow portion of tube 6, and porous body 7 is arranged along the entire length of tube 6, and therefore, the volume occupancy of porous body 7 with respect to the internal volume of tube 6 is 100%. The sound insulation performance for sounds of various frequencies in the state where this seal member is used is shown in Table 1 and FIG. 24. The sound insulation performance is insufficient, and the average decibel value of the amount of sound insulation at 4000 Hz-10000 Hz is 3.9 dB less than the prior-art example.

Comparative Example 4

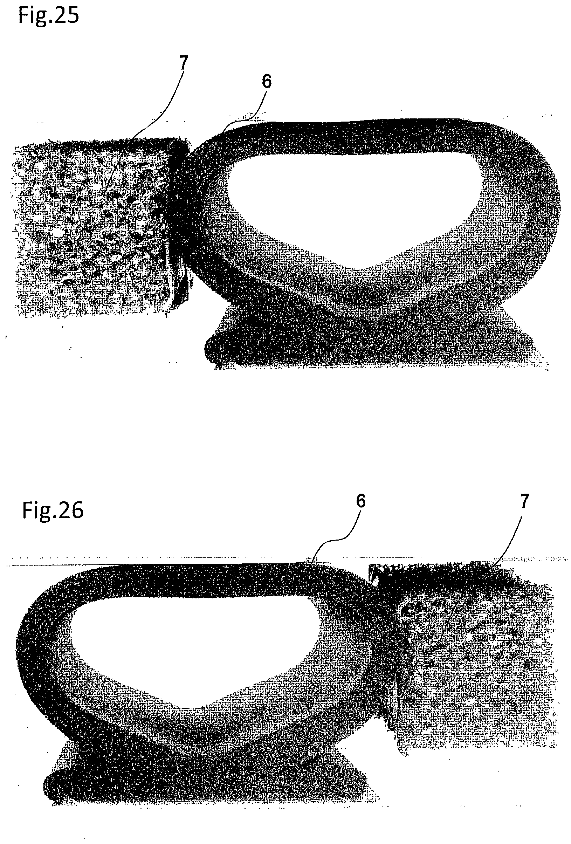

In seal member 1 of Comparative Example 4 shown schematically in FIG. 25, porous body 7, in which the cross-sectional shape is a square measuring 10 mm × 10 mm, is arranged along tube 6. The material that makes up this porous body 7 is a polyurethane foam identical to porous body 7 of Embodiment 3 (Trade Name: CALMFLEX F2 (made by INOAC Corporation)), and the water absorption coefficient in the uncompressed state, the bulk density in the uncompressed state, the 25% compression stress, and the 50% compression stress are all the same as for porous body 7 of Embodiment 3. The amount of sound insulation for sounds of various frequencies was measured when this seal member 1 is compressed 30% when porous body 7 is positioned on the sound production side. Because porous body 7 is arranged outside tube 6, the volume occupancy of porous body 7 with respect to the internal volume of tube 6 is 0%. The measurement results of the amount of sound insulation are shown in Table 1 and FIG. 24. By means of this seal member 1, as in the prior-art example, the amount of sound insulation is insufficient, particularly for high frequencies of 2000 Hz and higher, and the average decibel value of the amount of sound insulation at 4000 Hz-10000 Hz is improved by only 0.4 dB over the prior-art example.

Comparative Example 5

In Comparative Example 5 shown schematically in FIG. 26, seal member 1 of Comparative Example 4 is compressed 30% with porous body 7 positioned on the side opposite the sound production side and the amount of sound insulation for sounds of various frequencies was measured. Because porous body 7 is arranged outside tube 6, the volume occupancy of porous body 7 with respect to the internal volume of tube 6 was 0%. The measurement results of the amount of sound insulation are shown in Table 1 and FIG. 24. As with the prior-art example, the amount of sound insulation realized by means of this seal member 1 is inadequate, particularly for high frequencies of 2000 Hz or higher, and the average decibel value of the amount of sound insulation at 4000 Hz-10000 Hz is improved by only 0.4 dB over the prior-art example.

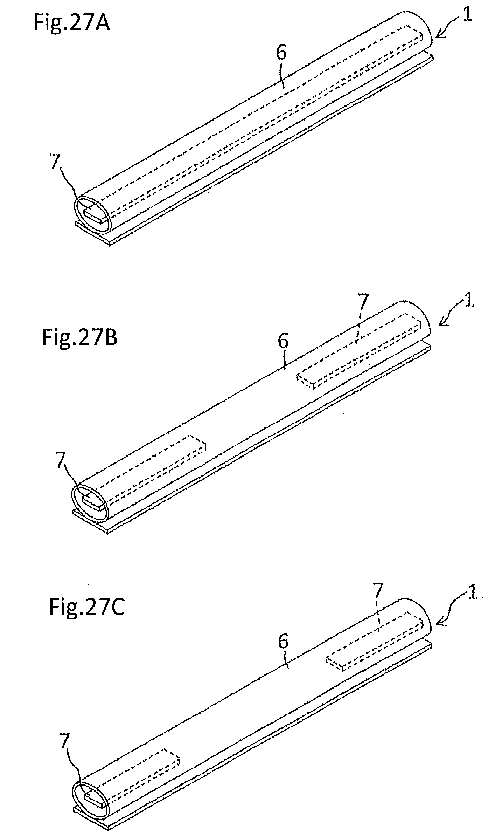

The seal members of Embodiments 1-9 and Comparative Examples 1-3 described above are of configurations in which porous body 7 is arranged along the entire length of tube 6. However, the present inventors found that in some cases, sound insulation effects could be obtained that are superior to the seal member (FIGs. 7A and 7B) of the prior-art example even in a configuration of arranging porous body 7 only partially along the longitudinal direction of tube 6 without arranging porous body 7 along the entire length of tube 6. As shown schematically in FIGs. 27B-27D, tubes 6 of Embodiments 10-26 and Comparative Examples 6 and 7 described hereinbelow are in a hollow linear form or curved form in which both ends are open instead of a closed loop form, and except for this point, are composed of the same materials having the same sectional dimensions and the same characteristics as tube 6 of the seal members of Embodiments 1-9 and Comparative Examples 1-5. The next explanation regards the details and sound insulation performance of seal members 1 of Embodiments 10-26 and Comparative Examples 6 and 7 that are of configurations in which porous body 7 is inserted into both end portions or one end portion (single end portion) of tube 6 that is in linear form or curved form.

Embodiment 10

In seal member 1 of Embodiment 10 of the present invention, porous body 7 that has a cross-sectional shape measuring 2 mm × 10 mm is inserted in the interior of hollow tube 6 of linear form or curved form and having both ends open. The material that makes up this porous body 7 is nonwoven fabric identical to Embodiment 5 (FIG. 13). The cross-sectional area of porous body 7 in the state where seal member 1 is used is 20% of the cross-sectional area of the hollow portion of tube 6. As shown in FIG. 27B, porous body 7 is arranged in, of the entire 840-mm length of tube 6, only portions within 280 mm of each of both end portions, and the volume occupancy of porous body 7 with respect to the internal volume of tube 6 is 13.3%. The sound insulation performance for sounds of various frequencies in the state where this seal member 1 is used is excellent compared to the prior-art example, and the average decibel value of the amount of sound insulation for 4000 Hz-10000 Hz is improved by 8.6 dB over the prior-art example. This result is shown in Table 2.

[TABLE 2]

|  | Porous Body | 4000-10000Hz Improvement Amount [dB] | Sound Insulation Effect | Seal Member Weight [g] | Tube Length [mm] | Arrangement of Porous Body | | |
|---|---|---|---|---|---|---|---|---|
|  |  |  |  |  |  | Porous Body Length [mm] | Installed Portion | Porous Body Volume Occupancy [%] |
| Prior Art Example | Absent | Reference | Reference | 81.4 | 840 |  |  |  |
| Embodiment 10 | Nonwoven Fabric | 8.6 | ⊙ | 84.2 | 840 | 280 | Both Ends | 13.3 |
| Embodiment 11 |  | 2.6 | ○ | 81.6 | 840 | 280 | One End | 6.7 |
| Embodiment 12 |  | 10.9 | ⊙ | 82.1 | 840 | 280 | Both Ends | 26.7 |
| Embodiment 13 |  | 2.5 | ○ | 81.6 | 840 | 280 | Both Ends | 6.7 |
| Embodiment 14 |  | 1.8 | △ | 81.5 | 840 | 280 | Both Ends | 2.7 |
| Embodiment 15 |  | 5.4 | ○ | 81.7 | 840 | 210 | Both Ends | 10.0 |
| Embodiment 16 |  | 4.3 | ○ | 81.6 | 840 | 105 | Both Ends | 5.0 |
| Embodiment 17 |  | 1.6 | △ | 81.5 | 840 | 53 | Both Ends | 2.5 |
| Embodiment 18 |  | 7.7 | ⊙ | 82.1 | 840 | 105 | Both Ends | 15.0 |
| Embodiment 19 |  | 1.7 | △ | 82.0 | 840 | 53 | Both Ends | 6.9 |
| Embodiment 20 | Polyurethane Foam | 12.0 | ⊙ | 84.0 | 840 | 280 | Both Ends | 40.0 |
| Embodiment 21 |  | 9.3 | ⊙ | 82.1 | 840 | 140 | Both Ends | 20.0 |
| Embodiment 22 |  | 8.4 | ⊙ | 82.1 | 840 | 53 | Both Ends | 7.5 |
| Embodiment 23 |  | 2.1 | ○ | 81.6 | 840 | 18 | Both Ends | 2.5 |
| Embodiment 24 |  | 4.0 | ○ | 81.7 | 840 | 53 | Both Ends | 7.5 |
| Embodiment 25 |  | 2.8 | ○ | 81.7 | 840 | 53 | Both Ends | 7.5 |
| Embodiment 26 | Foamed Rubber | 6.6 | ⊙ | 82.9 | 840 | 53 | Both Ends | 7.5 |
| Comparative Example 6 | Nonwoven Fabric | 0.4 | × | 81.5 | 840 | 53 | One End | 1.3 |
| Comparative Example 7 |  | 0.7 | × | 81.5 | 840 | 26 | Both Ends | 1.3 |

EP 3 460 295 B1

14

Embodiment 11

In seal member 1 of Embodiment 11 of the present invention, porous body 7, in which the cross-sectional shape measures 2 mm × 10 mm, is inserted in the interior of hollow tube 6 of linear or curved form and having both ends open. The material that makes up this porous body 7 is nonwoven fabric identical to Embodiment 5 (FIG. 13). The cross-sectional area of porous body 7 in the state where seal member 1 is used is 20% of the cross-sectional area of the hollow portion of tube 6. Porous body 7 is arranged in, of the entire 840 mm-length of tube 6, only the portion within 280 mm of one end portion (single end portion), and the volume occupancy of porous body 7 with respect to the internal volume of tube 6 is 6.7%. The sound insulation performance for sounds of various frequencies in the state where this seal member 1 is used is superior to the prior-art example, and the average decibel value of the amount of sound insulation at 4000 Hz-10000 Hz is improved by 2.6 dB over the prior-art example. These results are shown in Table 2.

Embodiment 12

In seal member 1 of Embodiment 12 of the present invention, porous body 7, in which the cross-sectional shape measures 2 mm × 20 mm, is inserted in the interior of hollow tube 6 of linear or curved form and having both ends open. The material that makes up this porous body 7 is nonwoven fabric identical to Embodiment 5 (FIG. 13). The cross-sectional area of porous body 7 in the state where seal member 1 is used is 40% of the cross-sectional area of the hollow portion of tube 6. Porous body 7 is arranged in, of the entire 840 mm-length of tube 6, only the portions within 280 mm of both end portions as shown in FIG. 27B, and the volume occupancy of porous body 7 with respect to the internal volume of tube 6 is 26.7%. The sound insulation performance for sounds of various frequencies in the state where this seal member 1 is used is superior to the prior-art example, and the average decibel value of the amount of sound insulation at 4000 Hz-10000 Hz is improved by 10.9 dB over the prior-art example. These results are shown in Table 2.

Embodiment 13

In seal member 1 of Embodiment 13 of the present invention, porous body 7, in which the cross-sectional shape measures 2 mm × 5 mm, is inserted in the interior of hollow tube 6 of linear or curved form and having both ends open. The material that makes up this porous body 7 is nonwoven fabric identical to Embodiment 5 (FIG. 13). The cross-sectional area of porous body 7 in the state where seal member 1 is used is 10% of the cross-sectional area of the hollow portion of tube 6. Porous body 7 is arranged in, of the entire 840 mm-length of tube 6, only the portions within 280 mm of both end portions as shown in FIG. 27B, and the volume occupancy of porous body 7 with respect to the internal volume of tube 6 is 6.7%. The sound insulation performance for sounds of various frequencies in the state where this seal member 1 is used is superior to the prior-art example, and the average decibel value of the amount of sound insulation at 4000 Hz-10000 Hz is improved by 2.5 dB over the prior-art example. These results are shown in Table 2.

Embodiment 14

In seal member 1 of Embodiment 14 of the present invention, porous body 7, in which the cross-sectional shape measures 2 mm × 2.5 mm, is inserted in the interior of hollow tube 6 of linear or curved form and having both ends open. The material that makes up this porous body 7 is nonwoven fabric identical to Embodiment 5 (FIG. 13). The cross-sectional area of porous body 7 in the state where seal member 1 is used is 5% of the cross-sectional area of the hollow portion of tube 6. Porous body 7 is arranged in, of the entire 840 mm-length of tube 6, only the portions within 280 mm of both end portions as shown in FIG. 27B, and the volume occupancy of porous body 7 with respect to the internal volume of tube 6 is 3.3%. The sound insulation performance for sounds of various frequencies in the state where this seal member 1 is used is superior to the prior-art example, and the average decibel value of the amount of sound insulation at 4000 Hz-10000 Hz is improved by 1.8 dB over the prior-art example. These results are shown in Table 2.

Embodiment 15

In seal member 1 of Embodiment 15 of the present invention, porous body 7, in which the cross-sectional shape measures 2 mm × 10 mm, is inserted in the interior of hollow tube 6 of linear or curved form and having both ends open. The material that makes up this porous body 7 is nonwoven fabric identical to Embodiment 5 (FIG. 13). The cross-sectional area of porous body 7 in the state where seal member 1 is used is 20% of the cross-sectional area of the hollow portion of tube 6. Porous body 7 is arranged in, of the entire 840 mm-length of tube 6, only the portions within 210 mm of both end portions as shown in FIG. 27C, and the volume occupancy of porous body 7 with respect to the internal volume of tube 6 is 10%. The sound insulation performance for sounds of various frequencies in the state where this seal member 1 is used is superior to the prior-art example, and the average decibel value of the amount of sound insulation at 4000 Hz-10000 Hz is improved by 5.4 dB over the prior-art example. These results are shown in Table 2.

Embodiment 16

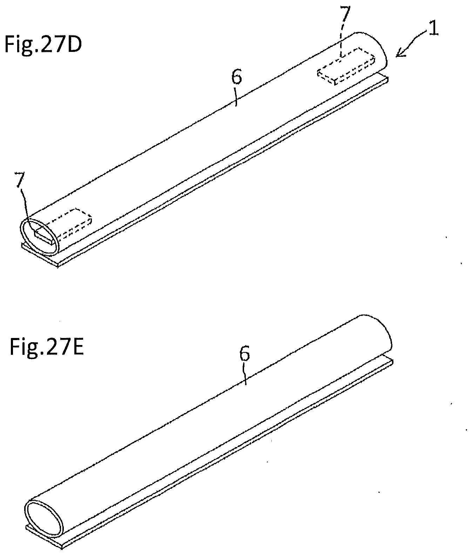

In seal member 1 of Embodiment 16 of the present invention, porous body 7, in which the cross-sectional shape measures 2 mm × 10 mm, is inserted in the interior of hollow tube 6 of linear or curved form and having both ends open. The material that makes up this porous body 7 is nonwoven fabric identical to Embodiment 5 (FIG. 13). The cross-sectional area of porous body 7 in the state where seal member 1 is used is 20% of the cross-sectional area of the hollow portion of tube 6. Porous body 7 is arranged in, of the entire 840 mm-length of tube 6, only the portions within 105 mm of both end portions as shown in FIG. 27D, and the volume occupancy of porous body 7 with respect to the internal volume of tube 6 is 5%. The sound insulation performance for sounds of various frequencies in the state where this seal member 1 is used is superior to the prior-art example, and the average decibel value of the amount of sound insulation at 4000 Hz-10000 Hz is improved by 4.3 dB over the prior-art example. These results are shown in Table 2.

Embodiment 17

In seal member 1 of Embodiment 17 of the present invention, porous body 7, in which the cross-sectional shape measures 2 mm × 10 mm, is inserted in the interior of hollow tube 6 of linear or curved form and having both ends open. The material that makes up this porous body 7 is nonwoven fabric identical to Embodiment 5 (FIG. 13). The cross-sectional area of porous body 7 in the state where seal member 1 is used is 20% of the cross-sectional area of the hollow portion of tube 6. Although not shown in the figures, porous body 7 is arranged in, of the entire 840 mm-length of tube 6, only the portions within 53 mm of both end portions, and the volume occupancy of porous body 7 with respect to the internal volume of tube 6 is 2.5%. The sound insulation performance for sounds of various frequencies in the state where this seal member 1 is used is superior to the prior-art example, and the average decibel value of the amount of sound insulation at 4000 Hz-10000 Hz is improved by 1.6 dB over the prior-art example. These results are shown in Table 2.

Embodiment 18

In seal member 1 of Embodiment 18 of the present invention, porous body 7, in which the cross-sectional shape measures 10 mm × 10 mm, is inserted in the interior of hollow tube 6 of linear or curved form and having both ends open. The material that makes up this porous body 7 is nonwoven fabric identical to Embodiment 5 (FIG. 13). The cross-sectional area of porous body 7 in the state where seal member 1 is used is 60% of the cross-sectional area of the hollow portion of tube 6. Porous body 7 is arranged in, of the entire 840 mm-length of tube 6, only the portions within 105 mm of both end portions as shown in FIG. 27D, and the volume occupancy of porous body 7 with respect to the internal volume of tube 6 is 15%. The sound insulation performance for sounds of various frequencies in the state where this seal member 1 is used is superior to the prior-art example, and the average decibel value of the amount of sound insulation at 4000 Hz-10000 Hz is improved by 7.7 dB over the prior-art example. These results are shown in Table 2.

Embodiment 19

In seal member 1 of Embodiment 19 of the present invention, porous body 7, in which the cross-sectional shape measures 8 mm × 13 mm, is inserted in the interior of hollow tube 6 of linear or curved form and having both ends open. The material that makes up this porous body 7 is nonwoven fabric identical to Embodiment 6 (FIG. 15). The cross-sectional area of porous body 7 in the state where seal member 1 is used is 55% of the cross-sectional area of the hollow portion of tube 6. Although not shown in the figures, porous body 7 is arranged in, of the entire 840 mm-length of tube 6, only the portions within 53 mm of both end portions, and the volume occupancy of porous body 7 with respect to the internal volume of tube 6 is 6.9%. The sound insulation performance for sounds of various frequencies in the state where this seal member 1 is used is superior to the prior-art example, and the average decibel value of the amount of sound insulation at 4000 Hz-10000 Hz is improved by 1.7 dB over the prior-art example. These results are shown in Table 2.

Embodiment 20

In seal member 1 of Embodiment 20 of the present invention, porous body 7, in which the cross-sectional shape measures 10 mm × 10 mm, is inserted in the interior of hollow tube 6 of linear or curved form and having both ends open. The material that makes up this porous body 7 is polyurethane foam identical to Embodiment 1 (FIG. 4). The cross-sectional area of porous body 7 in the state where seal member 1 is used is 60% of the cross-sectional area of the hollow portion of tube 6. Porous body 7 is arranged in, of the entire 840 mm-length of tube 6, only the portions within 280 mm of both end portions as shown in FIG. 27B, and the volume occupancy of porous body 7 with respect to the internal volume of tube 6 is 40%. The sound insulation performance for sounds of various frequencies in the state where this seal member 1 is used is superior to the prior-art example, and the average decibel value of the amount of sound insulation at 4000 Hz-10000 Hz is improved by 12.0 dB over the prior-art example. These results are shown in Table 2.

Embodiment 21

In seal member 1 of Embodiment 21 of the present invention, porous body 7, in which the cross-sectional shape measures 10 mm $\times$ 10 mm, is inserted in the interior of hollow tube 6 of linear or curved form and having both ends open. The material that makes up this porous body 7 is polyurethane foam identical to Embodiment 1 (FIG. 4). The cross-sectional area of porous body 7 in the state where seal member 1 is used is 60% of the cross-sectional area of the hollow portion of tube 6. Although not shown in the figures, the porous body is arranged in, of the entire 840 mm-length of tube 6, only the portions within 140 mm of both end portions, and the volume occupancy of porous body 7 with respect to the internal volume of tube 6 is 20%. The sound insulation performance for sounds of various frequencies in the state where this seal member 1 is used is superior to the prior-art example, and the average decibel value of the amount of sound insulation at 4000 Hz-10000 Hz is improved by 9.3 dB over the prior-art example. These results are shown in Table 2.

Embodiment 22

In seal member 1 of Embodiment 22 of the present invention, porous body 7, in which the cross-sectional shape measures 10 mm $\times$ 10 mm, is inserted in the interior of hollow tube 6 of linear or curved form and having both ends open. The material that makes up this porous body 7 is polyurethane foam identical to Embodiment 1 (FIG. 4). The cross-sectional area of porous body 7 in the state where seal member 1 is used is 60% of the cross-sectional area of the hollow portion of tube 6. Although not shown in the figures, porous body 7 is arranged in, of the entire 840 mm-length of tube 6, only the portions within 53 mm of both end portions, and the volume occupancy of porous body 7 with respect to the internal volume of tube 6 is 7.5%. The sound insulation performance for sounds of various frequencies in the state where this seal member 1 is used is superior to the prior-art example, and the average decibel value of the amount of sound insulation at 4000 Hz-10000 Hz is improved by 8.4 dB over the prior-art example. These results are shown in Table 2.

Embodiment 23

In seal member 1 of Embodiment 23 of the present invention, porous body 7, in which the cross-sectional shape measures 10 mm $\times$ 10 mm, is inserted in the interior of hollow tube 6 of linear or curved form and having both ends open. The material that makes up this porous body 7 is polyurethane foam identical to Embodiment 1 (FIG. 4). The cross-sectional area of porous body 7 in the state where seal member 1 is used is 60% of the cross-sectional area of the hollow portion of tube 6. Although not shown in the figures, porous body 7 is arranged in, of the entire 840 mm-length of tube 6, only the portions within 18 mm of both end portions, and the volume occupancy of porous body 7 with respect to the internal volume of tube 6 is 2.5%. The sound insulation performance for sounds of various frequencies in the state where this seal member 1 is used is superior to the prior-art example, and the average decibel value of the amount of sound insulation at 4000 Hz-10000 Hz is improved by 2.1 dB over the prior-art example. These results are shown in Table 2.

Embodiment 24

In seal member 1 of Embodiment 24 of the present invention, porous body 7, in which the cross-sectional shape measures 10 mm $\times$ 10 mm, is inserted in the interior of hollow tube 6 of linear or curved form and having both ends open. The material that makes up this porous body 7 is polyurethane foam identical to Embodiment 3 (FIG. 10). The cross-sectional area of porous body 7 in the state where seal member 1 is used is 60% of the cross-sectional area of the hollow portion of tube 6. Although not shown in the figures, the porous body 7 is arranged in, of the entire 840 mm-length of tube 6, only the portions within 53 mm of both end portions, and the volume occupancy of porous body 7 with respect to the internal volume of tube 6 is 7.5%. The sound insulation performance for sounds of various frequencies in the state where this seal member 1 is used is superior to the prior-art example, and the average decibel value of the amount of sound insulation at 4000 Hz-10000 Hz is improved by 4.0 dB over the prior-art example. These results are shown in Table 2.

Embodiment 25

In seal member 1 of Embodiment 25 of the present invention, porous body 7, in which the cross-sectional shape measures 10 mm × 10 mm, is inserted in the interior of hollow tube 6 of linear or curved form and having both ends open. The material that makes up this porous body 7 is polyurethane foam identical to Embodiment 2 (FIG. 9). The cross-sectional area of porous body 7 in the state where seal member 1 is used is 60% of the cross-sectional area of the hollow portion of tube 6. Although not shown in the figures, porous body 7 is arranged in, of the entire 840 mm-length of tube 6, only the portions within 53 mm of both end portions, and the volume occupancy of porous body 7 with respect to the internal volume of tube 6 is 7.5%. The sound insulation performance for sounds of various frequencies in the state where this seal member 1 is used is superior to the prior-art example, and the average decibel value of the amount of sound insulation at 4000 Hz-10000 Hz is improved by 2.8 dB over the prior-art example. These results are shown in Table 2.

Embodiment 26

In seal member 1 of Embodiment 26 of the present invention, porous body 7, in which the cross-sectional shape measures 10 mm × 10 mm, is inserted in the interior of hollow tube 6 of linear or curved form and having both ends open. The material that makes up this porous body 7 is foamed rubber identical to Embodiment 8 (FIG. 17). The cross-sectional area of porous body 7 in the state where seal member 1 is used is 60% of the cross-sectional area of the hollow portion of tube 6. Although not shown in the figures, porous body 7 is arranged in, of the entire 840 mm-length of tube 6, only the portions within 53 mm of both end portions, and the volume occupancy of porous body 7 with respect to the internal volume of tube 6 is 7.5%. The sound insulation performance for sounds of various frequencies in the state where this seal member 1 is used is superior to the prior-art example, and the average decibel value of the amount of sound insulation at 4000 Hz-10000 Hz is improved by 6.6 dB over the prior-art example. These results are shown in Table 2.

Comparative examples for comparison with Embodiments 10-26 of the present invention are next described.

Comparative Example 6

In seal member 1 of Comparative Example 6, porous body 7, in which the cross-sectional shape measures 2 mm × 10 mm, is inserted in the interior of hollow tube 6 of linear or curved form and having both ends open. The material that makes up this porous body 7 is nonwoven fabric identical to Embodiment 5 (FIG. 13). The cross-sectional area of porous body 7 in the state where seal member 1 is used is 20% of the cross-sectional area of the hollow portion of tube 6. Although not shown in the figures, porous body 7 is arranged in, of the entire 840 mm-length of tube 6, only the portions within 53 mm from one end portion (single end portion), and the volume occupancy of porous body 7 with respect to the internal volume of tube 6 is 1.3%. The sound insulation performance for sounds of various frequencies in the state where this seal member 1 is used, as with the prior-art example, is insufficient, particularly for high frequencies of 2000 Hz and higher. The average decibel value of the amount of sound insulation at 4000 Hz-10000 Hz is improved by only 0.4 dB over the prior-art example. These results are shown in Table 2.

Comparative Example 7

In seal member 1 of Comparative Example 7, porous body 7, in which the cross-sectional shape measures 2 mm × 10 mm, is inserted in the interior of hollow tube 6 of linear or curved form and having both ends open. The material that makes up this porous body 7 is nonwoven fabric identical to Embodiment 5 (FIG. 13). The cross-sectional area of porous body 7 in the state where seal member 1 is used is 20% of the cross-sectional area of the hollow portion of tube 6. Although not shown in the figures, porous body 7 is arranged in, of the entire 840 mm-length of tube 6, only the portions within 26 mm from both end portions, and the volume occupancy of porous body 7 with respect to the internal volume of tube 6 is 1.3%. The sound insulation performance for sounds of various frequencies in the state where this seal member 1 is used, as with the prior-art example, is insufficient, particularly for high frequencies of 2000 Hz and higher. The average decibel value of the amount of sound insulation at 4000 Hz-10000 Hz is improved by only 0.7 dB over the prior-art example. These results are shown in Table 2.

As described above, Embodiments 1-26 of the present invention exhibit excellent sound insulation performance in the range of frequencies of high-frequency noise (approximately 2000 Hz-approximately 16000 Hz) produced by electric motors that are used in electric vehicles or hybrid vehicles in particular. The realization of this superior sound insulation performance by Embodiments 1-26 is the effect exerted by the sound-absorbing effect of porous body 7 together with the vibration damping realized by the air in air-holding space 8. In contrast, in the prior-art example in which a porous body is not provided, sufficient sound insulation performance is not obtained because, despite the vibration damping effect realized by the air in tube 6, there is no sound absorbing effect realized by porous body 7. In Comparative Example 3 in which air-holding space is not present in tube 6, sufficient sound insulation performance is not obtained because there is no vibration damping effect realized by the air in tube 6, despite the sound-absorbing effect realized by porous body 7. In Comparative Examples 4 and 5 in which porous body 7 is positioned outside tube 6, because the vibration of air is conveyed via the side of porous body 7 that is positioned in open space, only an extremely small portion of the propagated air vibration is affected by the sound-absorbing effect of porous body 7, and sufficient sound insulation performance is not obtained.

In addition, of the seal members in which porous body 7 and air-holding space are provided inside tube 6, it is conceivable that the material that was used in Comparative Examples 1 and 2 was not suitable because Comparative Examples 1 and 2 were not able to realize sufficient sound insulation performance. In other words, when the material of Comparative Examples 1 and 2 is reexamined, it is determined that the bulk density is higher than in Embodiments 1-26. This high density of porous body 7 indicates that the sum total of the hole portions within a fixed sectional area of porous body 7 is low, and fewer hole portions gives rise to a lower sound-absorbing effect. Accordingly, in order to realize higher sound insulation performance, the density of porous body 7 is preferably lower. After taking into consideration that the sound insulation performance of Comparative Examples 1 and 2 is limited and the sound insulation performance of Embodiment 7 is within the permissible range, the bulk density can be said to preferably be no greater than 150 kg/m$^3$. However, when the density is too low, the material strength of porous body 7 decreases, raising the possibility of problems in processing or attachment, and the bulk density is therefore preferably at least 10 kg/m$^3$.

Focusing on the water absorption coefficient of the material that makes up porous body 7, it is believed that the quantity of continuous vacancies increases with a higher water absorption coefficient, and that high sound insulation performance is difficult to achieve when the water absorption coefficient is too low due to the scarcity of continuous vacancies. Comparing the water absorption coefficients of Embodiments 1-26 and Comparative Examples 1 and 2, it is believed possible that sufficient sound insulation performance cannot be obtained when the water absorption coefficient is not greater than 1.6%. Still further, in order to more reliably obtain adequate sound insulation performance, the water absorption coefficient should preferably be about 10% or more. However, when the water absorption coefficient becomes too high, not only does the absorption of the water that infiltrates from gaps increase the weight, but the blockage of the continuous vacancies prevents the realization of the water absorption coefficient is therefore preferably no greater than 3000%.

Focusing on the compression stress that is one characteristic of the material that makes up porous body 7, the 25% compression stress of porous body 7 of seal member 1 for which superior sound insulation performance was obtained was approximately 1 N/cm$^2$ or less. In addition, the 50% compression stress of porous body 7 of seal member 1 for which superior sound insulation performance was obtained was approximately 2.5 N/cm$^2$ or less.

As described above, in order to obtain superior sound insulation performance in seal member 1 of the present invention, the conditions must be met in which the bulk density be 10 kg/m$^3$ or more but no greater than 150 kg/m$^3$, the water absorption coefficient be 10% or more but no greater than 3000%, the 25% compression stress be no greater than 1 N/cm$^2$, and the 50% compression stress be no greater than 2.5 N/cm$^2$. Nevertheless, even if not all of these conditions are met, the effect of a certain level of improvement in sound insulation performance is obtained if at least one of these conditions is satisfied, and such cases are therefore included within the scope of present invention.

The sound insulation performance of seal member 1 of the present invention has been described hereinabove, but characteristics other than the sound insulation performance will next be described. Vehicle doors or building doors that are the chief use of seal member 1 of the present invention require reduction of weight, as previously described. Tube 6 of seal member 1 of the present invention is a component similar to the prior-art example, and only the addition of porous body 7 that is inserted into this tube 6 increases the weight of seal member 1. Accordingly, this porous body 7 should preferably be as light as possible. There is no great difference in the cross-sectional area among nearly all of Embodiments 1-9 and Comparative Examples 1-5, and the low density of porous body 7 prevents or reduces an increase of the weight of seal member 1. In other words, as described above, setting the bulk density to be no greater than 150 kg/m$^3$ is also effective for preventing or reducing an increase of the weight of seal member 1. Setting the bulk density low as described above obtains the extremely superior effect of achieving an increase of the sound insulation performance without greatly increasing the weight. In a seal member of the prior art, a seal member having high sound insulation performance typically tends to have greater weight. However, an examination of Table 1 reveals that the seal member of the present invention has superior sound insulation performance despite being clearly lighter than Comparative Examples 1-3 that have poor sound insulation performance. The present invention therefore achieves the particular effect of simultaneously realizing sound insulation performance and reduced weight, an achievement that was problematic in the prior art.

In addition, seal member 1 of the present invention does not involve complex manufacturing steps for seal member 1 and does not increase the number of components because porous body 7 that is to be inserted in the interior of tube 6 does not need to be inserted beforehand into, for example, a waterproof tube. Further, when porous body 7 is formed from a material having low compression stress as previously described, porous body 7 can be easily mounted and seal member 1 can be easily compressed during use, meaning not only that the workability is excellent, but that the reliability of the seal (resistance to heat and weather) is excellent due to the ability to easily achieve a good seal between the outer peripheral portion of door body 2a and 4a and door frame 3a and 5a with a small amount of force.

In Embodiments 10-26 of the present invention, porous body 7 is not arranged along the entire length of tube 6, as shown in FIG. 27A, thus showing that even a configuration in which porous body 7 is inserted only in portions in the longitudinal direction of tube 6 as shown in FIGs. 27B-27D obtains the effect of an improvement in sound insulation performance compared to a seal member of the prior art that does not have a porous body as shown in FIG. 27E. Embodiments 10-26, while realizing sound insulation performance that rivals seal member 1 of Embodiments 1-9 in which porous body 7 is arranged along the entire length of tube 6, also suppress manufacturing costs to a low level by both reducing the amount of necessary porous body 7 and facilitating the operation of inserting porous body 7, and further, suppress the weight of the overall seal member 1 and contribute to the various effects that accompany weight reduction. In Comparative Examples 6 and 7, however, sufficient sound insulation performance cannot be obtained because the proportion occupied by porous body 7 with respect to the internal volume of tube 6 (volume occupancy) is too small and the sound-absorbing effect of porous body 7 is not brought to bear. In view of the amount of improvement of the sound insulation performance of Embodiments 1-26 and Comparative Examples 1-7 shown in FIG. 2, the volume occupancy of porous body 7 is preferably on the order of 2.5-89%. Further, in view of the amount of improvement in sound insulation performance of Embodiments 10-26 and Comparative Examples 6 and 7, it can be seen that arranging porous body 7 to occupy at least 4% of the entire length of tube 6 in the longitudinal direction of tube 6 obtains the effect of improving the sound insulation performance.

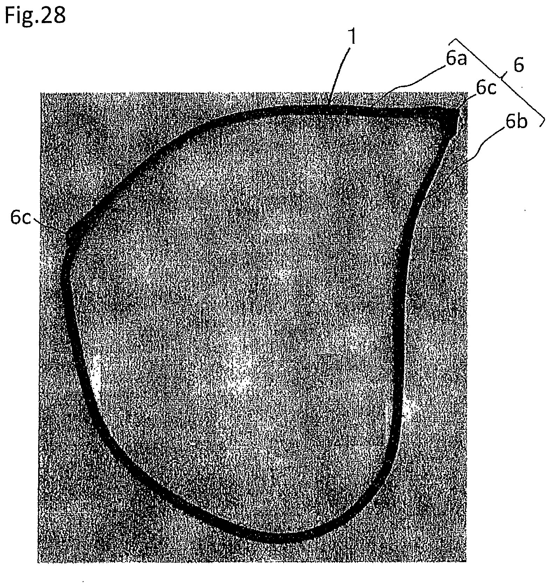

Hollow tube 6 in linear form or curved form having two end openings as shown in FIGs. 27A-27E is used in Embodiments 10-26, but this configuration may also form a part of closed-loop tube 6 such as shown in FIG. 28. In the example shown in FIG. 28, loop tube 6 that is a composite component is made up by joining a pair of tube members 6a and 6b by way of corner joint 6c. In this case, one or both of the pair of tube members 6a and 6b can make up the linear or curved seal member 1 as in Embodiments 10-26 by inserting porous body 7 in portions in the direction of longitude as described hereinabove. When seal member 1 is used in vehicle door 2 as shown in FIG. 1, loop-shaped tube 6 is typically configured by joining upper tube member 6a that is positioned in the upper portion (ceiling side) when installed and lower tube member 6b that is positioned in the lower portion (floor side), porous body 7 as in Embodiments 10-26 particularly preferably being arranged at least partially to improve the sound insulation performance in upper tube member 6a that is arranged at a position close to occupants' ears. In this case, porous body 7 may also be arranged at least partially in lower tube member 6b to improve the sound insulation performance, or porous body 7 may not be arranged in lower tube member 6b that is far from occupants' ears to further limit manufacturing costs and reduce weight.

A tube member (for example, upper tube member 6a) that is joined with another tube member (for example, lower tube member 6b) by way of corner joint 6c typically has two opened end portions for the sake of convenience of the forming and joining steps. A seal member that includes this type of tube member conventionally encounters difficulty in realizing high sound insulation performance due to sound leakage from the open end portions of the tube members. In this regard, porous body 7 prevents or reduces sound leakage from the open end portions in the above-described Embodiments 10-26. An examination of Table 2 reveals that an improvement in sound insulation performance is obtained when at least a portion of porous body 7 is present within a range of distance of 33% of the entire length of a tube member from the open end portions.

This insertion of porous body 7 into the interior of hollow tube 6 is effective both in loop-shaped seal member 1 that is closed as shown in FIG. 3, and further, in seal member 1 that is made up of hollow tube member 6a of linear or curved shape and that has both ends open, which is a component making up a portion of loop-shaped tube 6 that is a composite member such as shown in FIG. 28.

Seal member 1 of the present invention described above is not limited to a configuration that is to be mounted on the outer peripheral portion of a vehicle door body or building door body and may also be mounted on the inner side of a door frame. In addition, seal member 1 of the present invention may also be a component for sealing that is mounted on the outer peripheral portion of a housing portion for a vehicle drive device, such as the gasoline engine or electric motor of an automobile, and that is compressed against the chassis frame. Still further, the range of application of the seal member of the present invention is not limited and seal member 1 can be used in various members that require sealing in, for example, an electrical appliance.

Manufacturing Method of Seal Member

The manufacturing method of seal member 1 of the present invention is next described. This method is for manufacturing seal member 1 of a configuration in which porous body 7 is arranged in the interior of hollow tube 6 that is a composite member configured by joining a plurality of tube members 6a and 6b (components) by way of joint 6c as described above.

Normally, when forming hollow tube 6 that is a composite member, a plurality of tube members that are hollow components are joined by way of joints. As one example, one tube member is fitted onto one end portion of a rod-shaped (cylindrical) core for forming the hollow portion of a joint, and the other tube member is fitted onto the other end portion of the core. An unvulcanized rubber layer or a resin layer is then formed to cover the outer circumference of the core, and heat and pressure are applied to realize vulcanization-bonding of the rubber layer or heat and pressure are applied followed by cooling and pressurizing to solidify the resin layer and thus form a joint that is made up from an elastically deformable vulcanized rubber layer or resin layer.

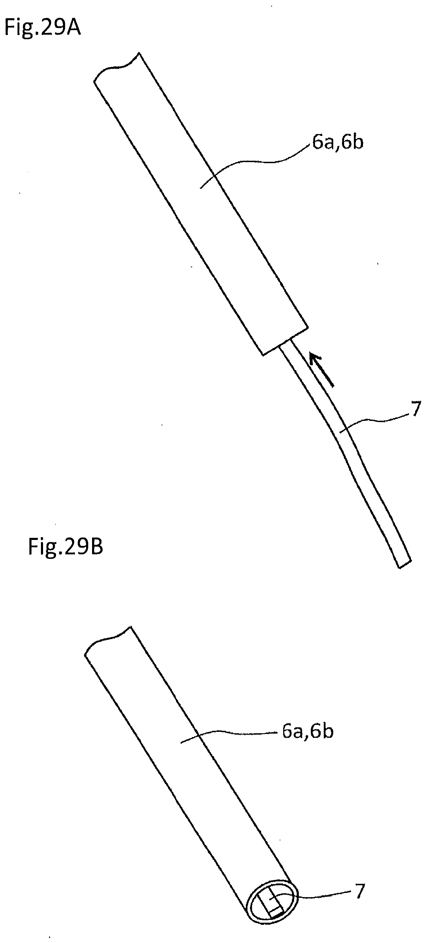

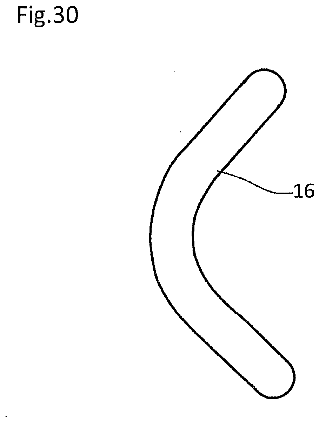

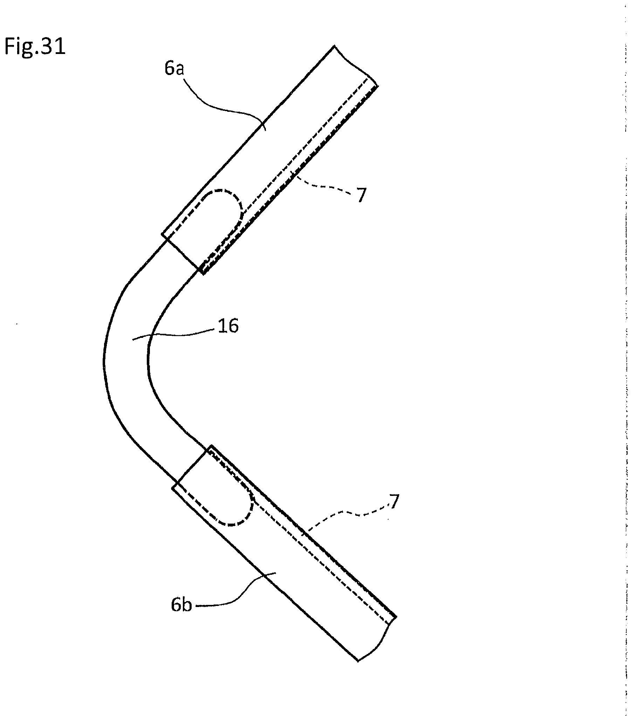

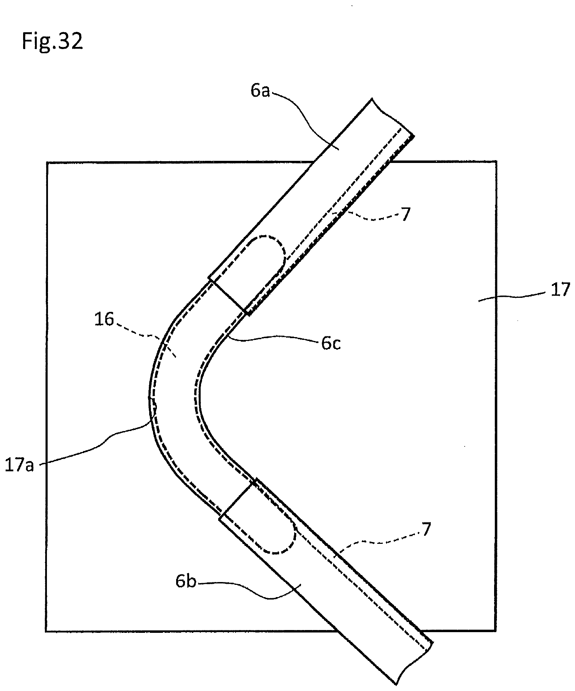

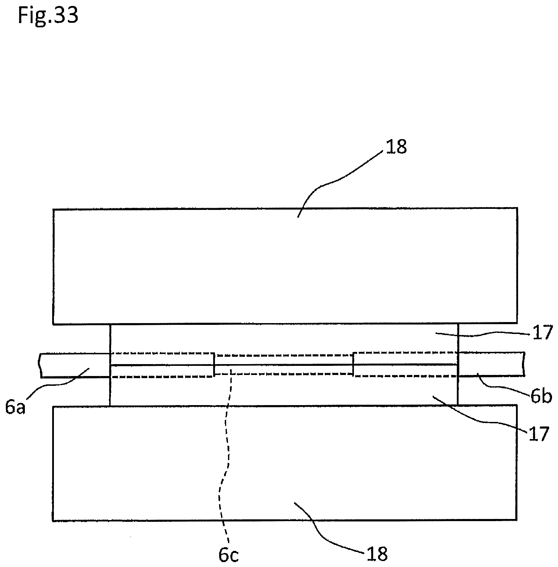

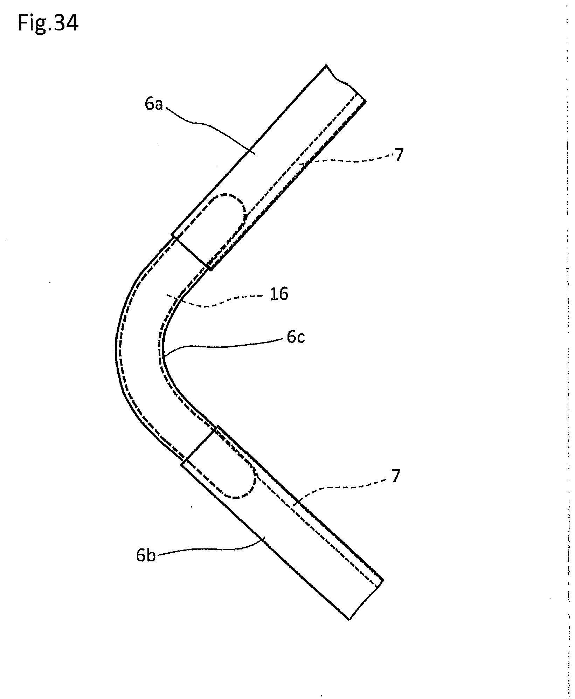

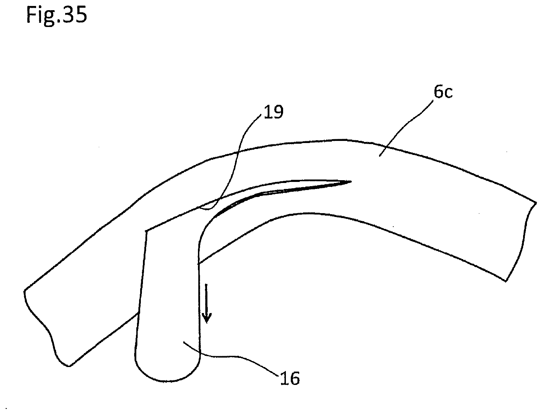

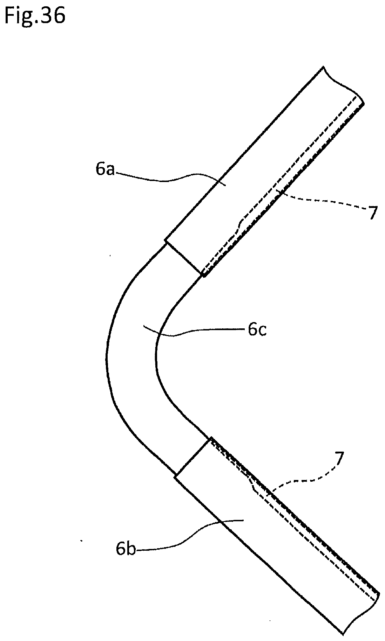

In the present invention, preceding the formation of joint 6c and the joining of tube members 6a and 6b, previously described porous body 7 is inserted in advance into the interiors of tube members 6a and 6b as shown in FIGs. 29A and 29B. Tube members 6a and 6b into which porous body 7 has been inserted are then each attached by inserting the two end portions of the curved rod-shaped (cylindrical) core 16 shown in FIG. 30 into tube members 6a and 6b (FIG. 31). At this time, porous body 7 preferably comes into contact with core 16. Unvulcanized rubber sheet or thermoplastic resin sheet is then wrapped around the circumference of core 16 to which are attached tube members 6a and 6b into which porous body 7 has been inserted. Core 16 to which tube members 6a and 6b are attached and that has been wrapped by unvulcanized rubber sheet or resin sheet is then placed in cavity 17a of die 17, as shown in FIG. 32. As schematically shown in FIG. 33, die 17 is then set in press 18 and the rubber is vulcanized by applying heat and pressure or the resin sheet is heat-welded by applying heat and pressure and then cooling and pressurizing to form joint 6c that is made up from a vulcanized rubber layer or a resin layer. As the heating conditions when vulcanizing rubber to form joint 6c, for example, heat is applied for 15 minutes at 170°C, applied for eight minutes at 180°C, or applied for four minutes at 190°C. As the heating conditions when solidifying thermoplastic resin to form joint 6c, for example, preheating is carried out at 200°C for ten minutes, heat and pressure are applied for five minutes, and cooling and pressurizing are implemented for five minutes. When joint 6c is completed, the product is removed from die 17 as shown in FIG. 34. Then, as shown in FIG. 35, while elastically deforming joint 6c, core 16 is extracted from slit part 19 of joint 6c that was formed in advance, for example, by a protrusion (not shown in the figure) provided in the die, or when the slit part was not formed in advance, a portion of joint 6c is cut to produce slit part 19, and then core 16 is extracted from produced slit part 19 of joint 6c. In this way, tube 6 of a configuration in which tube members 6a and 6b are joined by way of joint 6c is completed, as shown in FIG. 36.

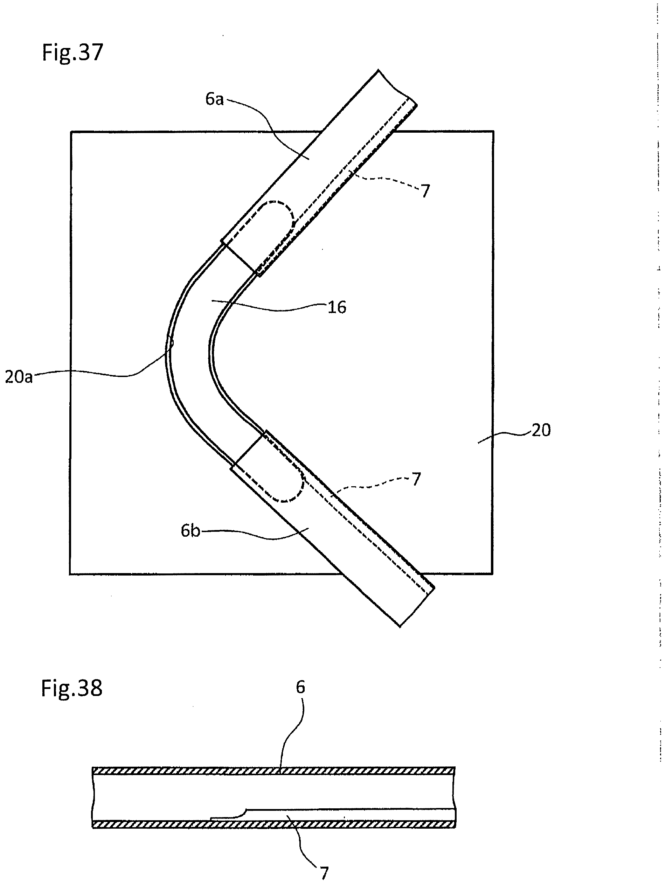

In another example, core 16 that is attached to tube members 6a and 6b into which porous body 7 has been inserted as previously described is placed inside cavity 20a of die 20 of the injection-molding device shown in FIG. 37, and melted unvulcanized rubber or resin is injected into cavity 20a to fill the interior of cavity 20a that is outside of core 16 with the melted unvulcanized rubber or resin. The injected unvulcanized rubber or resin is then vulcanized or solidified to form joint 6c that is made up from an elastically deformable vulcanized rubber layer or resin layer. Then, similar to the previously described steps, tube 6 is removed from the die and core 16 is extracted from slit part 19 of joint 6c as shown in FIGs. 34-35 to complete tube 6 of a configuration in which tube members 6a and 6b are joined by way of joint 6c as shown in FIG. 36.

According to the manufacturing method described above, when setting die 17 in a press and then applying heat and pressure to bring about vulcanization bonding or heat bonding of unvulcanized rubber sheet or resin sheet, or when injecting melted unvulcanized rubber or resin into cavity 20a of die 20 and then vulcanizing or solidifying, porous body 7 is bonded and secured to the inner surface of tube 6 (tube members 6a and 6b and joint 6c) as shown in FIG. 38. More specifically, when the temperature of porous body 7 rises to or above its melting point due to heated dies 17 and 20 or melted unvulcanized rubber or resin, at least a portion of porous body 7 is heat-welded to tube members 6a and 6b and joint 6c. Even if porous body 7 should not rise to or above its melting point, porous body 7 is bonded and secured to the inner surfaces of tube members 6a and 6b and joint 6c because, for example, the rubber or resin material that makes up tube members 6a and 6b and joint 6c softens, infiltrates the holes of porous body 7, and then vulcanizes or solidifies, or because softened porous body 7 and tube members 6a and 6b and joint 6c which have a certain degree of adhesiveness come into close contact with each other and then vulcanize or solidify together. The sound insulation performance improves when porous body 7 is secured in the interior of tube 6 that is made up of tube members 6a and 6b and joint 6c in this way. One reason for this improvement is the increase of the effect of absorbing vibration of porous body 7 that is realized because securing porous body 7 impedes the movement or vibration of porous body 7. In addition, slit part 19 of joint 6c for extracting core 16 is believed to interfere with sound insulation (contribute to the transmission of sound), but because porous body 7 is secured in the vicinity of slit part 19 and is therefore reliably positioned at a point where a sound-absorbing action is particularly desired, the sound insulation effect can be efficiently obtained.

Porous body 7 inside tube members 6a and 6b is preferably in contact with core 16 before bonding, because porous body 7 is heated in a state of being pressed by core 16 against tube members 6a and 6b and joint 6c, thus readily bonds with tube members 6a and 6b and joint 6c. In addition, even if porous body 7 is accommodated inside tube members 6a and 6b at the time of insertion into tube members 6a and 6b, porous body 7 that is heated and melts or softens may flow from the interior of tube members 6a and 6b to as far as the point of contact with the inner surface of joint 6c and bond to the inner surface of joint 6c. Nevertheless, porous body 7 may also be inserted into only tube members 6a or tube member 6b, or porous body 7 may be bonded only to the inner surfaces of tube members 6a and 6b without reaching a position that contacts joint 6c.

One additional effect realized by this manufacturing method is the ease of extracting core 16 after tube members 6a and 6b are joined by way of joint 6c. This effect is realized because porous body 7 that is made up of a sponge material, as represented by polyurethane foam, or nonwoven fabric causes less friction than the inner surfaces of tube members 6a and 6b and joint 6c, and as a result, when extracting core 16 from slit part 19, core 16 slips over the contact surface with porous body 7 and can be smoothly extracted.

As the material of tube members 6a and 6b and joint 6c described above, a synthetic rubber such as EPDM (ethylene propylene diene rubber) or an olefin-based thermoplastic elastomer (for example, Milastomer (Trade Name) of Mitsui Chemicals, Inc.) are typical, but the present invention is not limited to these materials. In addition, tube members 6a and 6b and joint 6c may also be formed from the same material but may also be formed from different materials. Porous body 7 may be formed from any of the materials of each of the above-described embodiments. Joint 6c may be a curved corner joint such as shown in FIG. 28 but may also be a non-curving linear joint (not shown).

Embodiments of seal members that have been manufactured by this manufacturing method and comparative example are next described to clarify the effects of the seal member manufacturing method described hereinabove.

Embodiment 27

In seal member 1 of Embodiment 27 of the present invention, porous body 7, in which the cross-sectional shape measures 10 mm × 10 mm, is inserted into, of the entire 840mm-length of a linear tube member 6a, only portions that are within 210 mm of each of the two end portions, and the two end portions of tube member 6a are each joined to 100mm-tube member 6b by way of L-shaped joints 6c. The material that makes up this porous body 7 is polyurethane foam identical to Embodiment 1 (FIG. 4). Joint 6c is fabricated by wrapping unvulcanized EPDM (Ethylene Propylene Diene rubber) composition in sheet form that contains a vulcanizing agent and foaming agent around each core, and then applying heat and pressure in a press to vulcanize the EPDM, in the state where porous body 7 has been inserted into tube member 6a and tube members 6a and 6b are linked with each other by way of the core. At this time, porous body 7 is bonded and secured to the inner surface of joint 6c. After forming joint 6c, a portion of joint 6c is cut to produce slit part 19, and core 16 is extracted from slit part 19. The volume occupancy of porous body 7 with respect to the inner volume of tube member 6a is 30%. The amount of sound insulation for sounds of various frequencies in the state where this seal member 1 is used is 51.9 dB at 4000 Hz, 59.8 dB at 5000 Hz, 63.5 dB at 6300 Hz, 67.3 dB at 8000 Hz, and 54.7 dB at 10000 Hz; and the average decibel value of the amount of sound insulation for 4000 Hz - 10000 Hz is 62.6 dB. These results are shown in Table 3. Table 3 shows the quality of the sound insulation effect as determined with Comparative Example 8 (a seal member that does not include a porous body) to be described, as a reference.

[TABLE 3]

| | Porous Body | Arrangement of Porous Body | | Joint Material | Sound Insulation Amount [dB] | | | | | | Sound Insulation Effect |
|---|---|---|---|---|---|---|---|---|---|---|---|
| | | Installed Portion | Volume Occupancy of Porous Body [%] | | 4000 Hz | 5000 Hz | 6300 Hz | 8000 Hz | 10000 Hz | 4000-10000 Hz Average | |
| Embodiment 27 | Polyurethane Foam | Both Ends 210 mm | 30 | EPDM | 51.9 | 59.8 | 63.5 | 67.3 | 54.7 | 62.6 | ⊙ |
| Embodiment 28 | Nonwoven Fabric | Both Ends 210 mm | 10 | EPDM | 42.1 | 50.1 | 55.7 | 61.2 | 57.1 | 56.7 | ⊙ |
| Embodiment 29 | | Both Ends 210 mm | 10 | Resin | 44.6 | 53.1 | 56.6 | 58.6 | 56.8 | 55.8 | ⊙ |
| Comparative Example 8 | Absent | | | EPDM | 38.4 | 44.3 | 46.6 | 50.2 | 50.6 | 47.7 | Reference |

Embodiment 28

In seal member 1 of Embodiment 28 of the present invention, porous body 7, in which the cross-sectional shape measures 2 mm × 10 mm, is inserted into, of the entire 840mm-length of a linear tube member 6a, only portions that are within 210 mm of the two end portions, and the two end portions of tube member 6a are joined to 100mm-tube member 6b by way of L-shaped joints 6c. The material that makes up this porous body 7 is nonwoven fabric identical to Embodiment 5 (FIG. 13). Joint 6c is fabricated by wrapping unvulcanized EPDM (Ethylene Propylene Diene rubber) composition in sheet form that contains a vulcanizing agent and foaming agent around each core, and then applying heat and pressure in a press to vulcanize the EPDM, in the state where porous body 7 has been inserted into tube member 6a and tube members 6a and 6b are linked with each other by way of the core. At this time, porous body 7 is bonded and secured to the inner surface of joint 6c. After forming joint 6c, a portion of each joint 6c is cut to produce slit part 19, and core 16 is extracted from slit part 19. The volume occupancy of porous body 7 with respect to the inner volume of tube member 6a is 10%. The amount of sound insulation for sounds of various frequencies in the state where this seal member 1 is used is 42.1 dB at 4000 Hz, 50.1 dB at 5000 Hz, 55.7 dB at 6300 Hz, 61.2 dB at 8000 Hz, and 57.1 dB at 10000 Hz; and the average decibel value of the amount of sound insulation for 4000 Hz - 10000 Hz is 56.7 dB. These results are shown in Table 3.

Embodiment 29

In seal member 1 of Embodiment 29 of the present invention, porous body 7, in which the cross-sectional shape measures 2 mm × 10 mm, is inserted into, of the entire 840mm-length of a linear tube member 6a, only portions that are within 210 mm of the two end portions, and the two end portions of tube member 6a are joined to 100mm-tube member 6b by way of L-shaped joints 6c. The material that makes up this porous body 7 is nonwoven fabric identical to Embodiment 5 (FIG. 13). Joint 6c is fabricated by wrapping a sheet of Milastomer S-450B (Trade Name), which is a thermoplastic elastomer resin produced by Mitsui Chemicals, Inc., around each core, applying heat and pressure in a press followed by cooling and pressurizing, in the state where porous body 7 has been inserted into tube member 6a and tube members 6a and 6b are linked with each other by way of the core. At this time, porous body 7 is bonded and secured to the inner surface of each joint 6c. After forming joint 6c, a portion of each joint 6c is cut to produce slit part 19, and core 16 is extracted from this slit part 19. The volume occupancy of porous body 7 with respect to the inner volume of tube member 6a is 10%. The amount of sound insulation for sounds of various frequencies in the state where this seal member 1 is used is 44.6 dB at 4000 Hz, 53.1 dB at 5000 Hz, 56.6 dB at 6300 Hz, 58.6 dB at 8000 Hz, and 56.8 dB at 10000 Hz; and the average decibel value of the amount of sound insulation for 4000 Hz - 10000 Hz is 55.8 dB. These results are shown in Table 3.

Comparative Example 8

In seal member 1 of Comparative Example 8, porous body 7 is not inserted into the entire 840mm-length of linear tube member 6a, and tube member 6a is joined at two end portions to 100mm-tube member 6b by way of L-shaped joints 6c. Joint 6c is fabricated by wrapping an unvulcanized EPDM (Ethylene Propylene Diene rubber) composition in sheet form that contains a vulcanizing agent and foaming agent around each core, and then applying heat and pressure in a press to vulcanize the EPDM, in the state where tube members 6a and 6b are linked with each other by way of the core. After forming joint 6c, a portion of each joint 6c is cut to produce slit part 19, and core 16 is extracted from this slit part 19. The amount of sound insulation for sounds of various frequencies in the state where this seal member 1 is used is 38.4 dB at 4000 Hz, 44.3 dB at 5000 Hz, 46.6 dB at 6300 Hz, 50.2 dB at 8000 Hz, and 50.6 dB at 10000 Hz; and the average decibel value of the amount of sound insulation for 4000 Hz - 10000 Hz is 47.7 dB. These results are shown in Table 3.

As described above, the seal member that is manufactured by the method of the present invention, i.e., the seal member of Embodiments 27-29, obtains the effect of exhibiting superior sound insulation performance in the range of 4000 Hz-10000 Hz with respect to the seal member of Comparative Example 8 that does not include a porous body. This effect is believed to result from the adhesion of porous body 7 in the vicinity of slit part 19, whereby porous body 7 is reliably positioned at the location at which a sound-absorbing effect is particularly desired and a sound insulation effect can be efficiently obtained.

Explanation of Reference Numbers

[0087]

1          seal member

EP 3 460 295 B1

| | |
|---|---|
| 2 | vehicle door |
| 2a | vehicle door body |
| 3 | vehicle body |
| 3a | door frame |
| 4 | building door |
| 4a | building door body |
| 5 | skeleton |
| 5a | door frame |
| 6 | tube |
| 6a, 6b | tube member |
| 6c | joint |
| 7 | porous body |
| 8 | air-holding space |
| 9 | reverberation chamber |
| 10 | half-anechoic chamber |
| 11 | partition wall part |
| 12 | opening |
| 13 | retaining mechanism |
| 14 | speaker |
| 15 | microphone |
| 16 | core |
| 17,20 | die |
| 17a, 20a | cavity |
| 18 | press |
| 19 | slit part |

**Claims**

1. A seal member (1) that is elastically deformable, comprising:

   a hollow tube (6) and a porous body (7) that is inserted in the interior of said tube (6);
   wherein:

   the interior of said tube (6) is not completely filled by said porous body (7), and air-holding space (8) is provided between a portion of the inner wall of said tube (6) and a portion of the outer surface of said porous body (7);
   said porous body (7) is composed of a material having a water absorption coefficient of at least 10% and no greater than 3000% in an uncompressed state;
   said porous body (7) is arranged such that the volume of said porous body (7) occupies at least 2.5% of the internal volume of said tube (6);
   and **characterized in that**
   said hollow tube (6) has a configuration in which a plurality of hollow tube members (6a, 6b) are joined by way of a joint (6c); and
   said porous body (7) is bonded to the inner surface of said joint (6c) and to the inner surface of said tube member (6a, 6b) into which said porous body (7) has been inserted.

2. A seal member (1) as set forth in claim 1, wherein
   said porous body (7) is composed of a material having a bulk density of at least 10 kg/m$^3$ and no greater than 150 kg/m$^3$ in an uncompressed state.

3. A seal member (1) as set forth in claim 1 or 2, wherein
   said porous body (7) is composed of a material for which compression stress is no greater than 1 N/cm$^2$ for compression in which the dimension in the direction of compression is reduced by 25%.

4. A seal member (1) as set forth in any one of claims 1 to 3, wherein
   said porous body (7) is composed of a material for which compression stress is no greater than 2.5 N/cm$^2$ for compression in which the dimension in the direction of compression is reduced by 50%.

5. The seal member (1) as set forth in any one of claims 1 to 4, wherein said porous body (7) is arranged such that the volume of said porous body (7) is no greater than 89% of the internal volume of said tube (6).

6. The seal member (1) as set forth in any one of claims 1 to 5, wherein said porous body (7) is arranged in a range of at least 4% of the entire length of said tube (6) in the longitudinal direction of said tube (6).

7. The seal member (1) as set forth in any one of claims 1 to 6, wherein said tube (6) is a linear or curved shape having both ends open and at least a portion of said porous body (7) is arranged within a range for which the distance from one of the open end portions is no more than 33% of the entire length of said tube (6).

8. The seal member (1) as set forth in claim 7, wherein said tube (6) is joined to another tube by way of a joint to form a closed loop.

9. The seal member (1) as set forth in any one of claims 1 to 8, wherein said porous body (7) is composed of a material that contains at least one from among foamed rubber, nonwoven fabric and polyurethane foam.

10. A seal member (1) as set forth in any one of claims 1 to 8, wherein
said porous body (7) is composed of a material that contains nonwoven fabric.

11. A seal member (1) as set forth in any one of claims 1 to 8, wherein
said porous body (7) is composed of a material that contains polyurethane foam.

12. The seal member (1) as set forth in any one of claims 1 to 11, wherein said tube (6) is composed of an elastomer having specific gravity of at least 0.3 but no greater than 1 and a water absorption coefficient less than 50%.

13. The seal member (1) as set forth in claim 12, wherein said elastomer contains ethylene $\alpha$-olefin nonconjugated polyene copolymer.

14. The seal member (1) as set forth in any one of claims 1 to 13, wherein said tube (6) has an inside diameter of at least 5 mm but no greater than 40 mm in an uncompressed state.

15. The seal member (1) as set forth in any one of claims 1 to 14, wherein the cross-sectional area of said porous body (7) in the state where said seal member (1) is used is at least 5% of and no greater than 90% of the cross-sectional area of the portion enclosed by said inner wall of said tube (6).

16. The seal member (1) as set forth in any one of claims 1 to 15, wherein said seal member (1) is attached to the outer peripheral portion of a vehicle door body (2a) of a vehicle door (2).

17. The seal member (1) as set forth in any one of claims 1 to 15, wherein said seal member (1) is attached to the outer peripheral portion of a housing portion of a vehicle drive device.

18. The seal member (1) as set forth in any one of claims 1 to 15, wherein said seal member (1) is attached to the outer peripheral portion of a building door body (4a) of a building door (4).

19. A vehicle door (2) comprising: said vehicle door body (2a); and the seal member (1) as set forth in claim 16.

20. A building door (4) comprising: said building door body (4a); and the seal member (1) as set forth in claim 18.

21. A manufacturing method of an elastically deformable seal member (1), said elastically deformable seal member (1) having a hollow tube (6) of a configuration in which a plurality of hollow tube members (6a, 6b) are joined by way of a joint (6c) and a porous body (7) that is inserted in the interior of said tube (6), said manufacturing method of a seal member (1) comprising steps of:

inserting said porous body (7) into the interior of at least one said tube members (6a, 6b) before joining;
after the step of inserting said porous body (7) into the interior of at least one said tube members (6a, 6b), attaching each of said tube members (6a, 6b) to both end portions of a rod-shaped core for joint (6c) formation;
forming a joint (6c) composed of a vulcanized rubber layer or a resin layer that can be elastically deformed on the outer circumference of said core (16) to which said tube members (6a, 6b) are attached at its two end portions; and

after the step of forming said joint (6c) that is composed of a vulcanized rubber layer or a resin layer that can be elastically deformed on the outer circumference of said core (16), removing said core (16) from a slit part (19) of said joint (6c).

22. The manufacturing method of a seal member (1) as set forth in claim 21, wherein, in the step of forming said joint (6c), said porous body (7) is bonded and secured to the inner surface of said tube member (6a, 6b) into which said porous body (7) has been inserted.

23. The manufacturing method of a seal member (1) as set forth in claim 21, wherein, in the step of forming said joint (6c), said porous body (7) is bonded and secured to the inner surface of said joint (6c) and to the inner surface of said tube member (6a, 6b) into which said porous body (7) has been inserted.

24. The manufacturing method of a seal member (1) as set forth in any one of claims 21 to 23, wherein, in the step of attaching said tube members (6a, 6b) to the two end portions of the core (16), said porous body (7) in the interior of said tube member (6a, 6b) is caused to contact said core (16).

25. The manufacturing method of a seal member (1) as set forth in any one of claims 21 to 24, wherein, in the step of forming said joint (6c), an unvulcanized rubber sheet or resin sheet is wrapped around the outer circumference of said core (16), following which heat and pressure are applied to cause vulcanization-bonding of said unvulcanized rubber sheet or to cause heat-welding of said resin sheet.

26. The manufacturing method of a seal member (1) as set forth in any one of claims 21 to 24, wherein, in the step of forming said joint (6c), said core (16) is arranged inside a cavity (17a; 20a) of a die (17; 20), following which melted unvulcanized rubber or resin is injected into said cavity (17a; 20a) and then vulcanized or solidified.

27. The seal member (1) as set forth in any one of claims 1 to 18, wherein said porous body (7) is vulcanization-bonded or heat-welded to the inner surface of said tube member (6a, 6b) into which the porous body (7) has been inserted.

28. The seal member (1) as set forth in any one of claims 1 to 18 and 27, wherein the material of said tube member (6a, 6b) into which said porous body (7) has been inserted vulcanizes or solidifies after having entered pores of said porous body (7).

29. The seal member (1) as set forth in any one of claims 1 to 18, 27 and 28, wherein said porous body (7) is vulcanization-bonded or heat-welded to the inner surface of said joint (6c) and to the inner surface of said tube member (6a, 6b) into which said porous body (7) has been inserted.

30. The seal member (1) as set forth in any one of claims 1 to 18, 27, 28 and 29, wherein the material of said joint (6c) and the material of said tube member (6a, 6b) into which said porous body (7) has been inserted vulcanize or solidify after having entered pores of said porous body (7).

**Patentansprüche**

1. Dichtungselement (1), das elastisch verformbar ist, umfassend:

ein hohles Rohr (6) und einen porösen Körper (7), der in das Innere des Rohrs (6) eingesetzt ist;
wobei:

das Innere des Rohrs (6) nicht vollständig durch den porösen Körper (7) gefüllt ist und ein lufthaltender Raum (8) zwischen einem Abschnitt der Innenwand des Rohrs (6) und einem Abschnitt der Außenoberfläche des porösen Körpers (7) bereitgestellt ist;
der poröse Körper (7) aus einem Material besteht, das in einem unkomprimierten Zustand einen Wasserabsorptionskoeffizienten von mindestens 10% und nicht mehr als 3000% aufweist;
der poröse Körper (7) so angeordnet ist, dass das Volumen des porösen Körpers (7) mindestens 2,5% des Innenvolumens des Rohrs (6) einnimmt;
und **dadurch gekennzeichnet, dass**
das hohle Rohr (6) eine Konfiguration aufweist, in der eine Vielzahl von hohlen Rohrelementen (6a, 6b) mittels einer Verbindung (6c) verbunden sind; und

der poröse Körper (7) mit der Innenoberfläche der Verbindung (6c) und mit der Innenoberfläche des Rohrelements (6a, 6b), in das der poröse Körper (7) eingesetzt wurde, verklebt ist.

2. Dichtungselement (1) nach Anspruch 1, wobei
der poröse Körper (7) aus einem Material besteht, das eine Schüttdichte von mindestens 10 kg/m$^3$ und nicht mehr als 150 kg/m$^3$ in einem unkomprimierten Zustand aufweist.

3. Dichtungselement (1) nach Anspruch 1 oder 2, wobei
der poröse Körper (7) aus einem Material besteht, für das die Kompressionsspannung nicht größer als 1 N/cm$^2$ für Kompression ist, bei der die Abmessung in der Richtung der Kompression um 25% reduziert ist.

4. Dichtungselement (1) nach einem der Ansprüche 1 bis 3, wobei
der poröse Körper (7) aus einem Material besteht, für das die Kompressionsspannung nicht größer als 2,5 N/cm$^2$ für Kompression ist, bei der die Abmessung in der Richtung der Kompression um 50% reduziert ist.

5. Dichtungselement (1) nach einem der Ansprüche 1 bis 4, wobei der poröse Körper (7) so angeordnet ist, dass das Volumen des porösen Körpers (7) nicht mehr als 89% des Innenvolumens des Rohrs (6) beträgt.

6. Dichtungselement (1) nach einem der Ansprüche 1 bis 5, wobei der poröse Körper (7) in einem Bereich von mindestens 4% der Gesamtlänge des Rohrs (6) in der Längsrichtung des Rohrs (6) angeordnet ist.

7. Dichtungselement (1) nach einem der Ansprüche 1 bis 6, wobei das Rohr (6) von linearer oder gekrümmter Form ist, wobei beide Enden offen sind und mindestens ein Abschnitt des porösen Körpers (7) innerhalb eines Bereichs angeordnet ist, für den der Abstand von einem der offenen Endabschnitte nicht mehr als 33% der Gesamtlänge des Rohrs (6) beträgt.

8. Dichtungselement (1) nach Anspruch 7, wobei das Rohr (6) mit einem anderen Rohr mittels einer Verbindung verbunden ist, um eine geschlossene Schleife zu bilden.

9. Dichtungselement (1) nach einem der Ansprüche 1 bis 8, wobei der poröse Körper (7) aus einem Material besteht, das mindestens eines von Schaumgummi, Vliesstoff und Polyurethanschaum enthält.

10. Dichtungselement (1) nach einem der Ansprüche 1 bis 8, wobei der poröse Körper (7) aus einem Material besteht, das Vliesstoff enthält.

11. Dichtungselement (1) nach einem der Ansprüche 1 bis 8, wobei der poröse Körper (7) aus einem Material besteht, das Polyurethanschaum enthält.

12. Dichtungselement (1) nach einem der Ansprüche 1 bis 11, wobei das Rohr (6) aus einem Elastomer besteht, das ein spezifisches Gewicht von mindestens 0,3, aber nicht mehr als 1 und einen Wasserabsorptionskoeffizienten von weniger als 50% aufweist.

13. Dichtungselement (1) nach Anspruch 12, wobei das Elastomer ein Ethylen-$\alpha$-Olefinnichtkonjugiertes-Polyen-Copolymer enthält.

14. Dichtungselement (1) nach einem der Ansprüche 1 bis 13, wobei das Rohr (6) in einem unkomprimierten Zustand einen Innendurchmesser von mindestens 5 mm, aber nicht mehr als 40 mm aufweist.

15. Dichtungselement (1) nach einem der Ansprüche 1 bis 14, wobei der Querschnittsbereich des porösen Körpers (7) in dem Zustand, in dem das Dichtungselement (1) verwendet wird, mindestens 5% und nicht mehr als 90% des Querschnittsbereichs des von der Innenwand des Rohrs (6) umschlossenen Bereichs beträgt.

16. Dichtungselement (1) nach einem der Ansprüche 1 bis 15, wobei das Dichtungselement (1) am Außenumfangsabschnitt eines Fahrzeugtürkörpers (2a) einer Fahrzeugtür (2) angebracht ist.

17. Dichtungselement (1) nach einem der Ansprüche 1 bis 15, wobei das Dichtungselement (1) an dem Außenumfangsabschnitt eines Gehäuseabschnitts einer Fahrzeugantriebsvorrichtung angebracht ist.

**18.** Dichtungselement (1) nach einem der Ansprüche 1 bis 15, wobei das Dichtungselement (1) am Außenumfangsabschnitt eines Gebäudetürkörpers (4a) einer Gebäudetür (4) angebracht ist.

**19.** Fahrzeugtür (2), umfassend: den Fahrzeugtürkörper (2a); und das Dichtungselement (1) nach Anspruch 16.

**20.** Gebäudetür (4), umfassend: den Gebäudetürkörper (4a); und das Dichtungselement (1) nach Anspruch 18.

**21.** Verfahren zur Herstellung eines elastisch verformbaren Dichtungselements (1), wobei das elastisch verformbare Dichtungselement (1) ein hohles Rohr (6) mit einer Konfiguration aufweist, in der eine Vielzahl von hohlen Rohrelementen (6a, 6b) mittels einer Verbindung (6c) und eines porösen Körpers (7), der in das Innere des Rohrs (6) eingesetzt ist, verbunden sind, wobei das Verfahren zur Herstellung eines Dichtungselements (1) die folgenden Schritte umfasst:

Einsetzen des porösen Körpers (7) in das Innere von mindestens einem der Rohrelemente (6a, 6b) vor dem Verbinden;
nach dem Schritt des Einsetzens des porösen Körpers (7) in das Innere mindestens eines der Rohrelemente (6a, 6b), Anbringen jedes der Rohrelemente (6a, 6b) an beiden Endabschnitten eines stangenförmigen Kerns zur Bildung einer Verbindung (6c);
Bilden einer Verbindung (6c), die aus einer vulkanisierten Kautschukschicht oder einer Harzschicht besteht, die auf dem Außenumfang des Kerns (16) elastisch verformt werden kann, an dem die Rohrelemente (6a, 6b) an ihren beiden Endabschnitten angebracht sind; und
nach dem Schritt des Bildens der Verbindung (6c), die aus einer vulkanisierten Kautschukschicht oder einer Harzschicht besteht, die am Außenumfang des Kerns (16) elastisch verformt werden kann, Entfernen des Kerns (16) aus einem geschlitzten Teil (19) der Verbindung (6c).

**22.** Verfahren zur Herstellung eines Dichtungselements (1) nach Anspruch 21, wobei in dem Schritt des Bildens der Verbindung (6c) der poröse Körper (7) mit der Innenoberfläche des Rohrelements (6a, 6b), in das der poröse Körper (7) eingesetzt wurde, verklebt und gesichert wird.

**23.** Verfahren zur Herstellung eines Dichtungselements (1) nach Anspruch 21, wobei in dem Schritt des Bildens der Verbindung (6c) der poröse Körper (7) mit der Innenoberfläche der Verbindung (6c) und mit der Innenoberfläche des Rohrelements (6a, 6b), in das der poröse Körper (7) eingesetzt wurde, verklebt und gesichert ist.

**24.** Verfahren zur Herstellung eines Dichtungselements (1) nach einem der Ansprüche 21 bis 23, wobei in dem Schritt des Anbringens der Rohrelemente (6a, 6b) an den beiden Endabschnitten des Kerns (16) der poröse Körper (7) im Inneren des Rohrelements (6a, 6b) veranlasst wird, mit dem Kern (16) in Kontakt zu treten.

**25.** Verfahren zur Herstellung eines Dichtungselements (1) nach einem der Ansprüche 21 bis 24, wobei in dem Schritt des Bildens der Verbindung (6c) eine unvulkanisierte Kautschukplatte oder Harzplatte um den Außenumfangs des Kerns (16) gewickelt wird, woraufhin Wärme und Druck aufgebracht werden, um eine Vulkanisationsverbindung der unvulkanisierten Kautschukplatte zu veranlassen oder um eine Wärmeverschweißung der Harzplatte zu veranlassen.

**26.** Verfahren zur Herstellung eines Dichtungselements (1) nach einem der Ansprüche 21 bis 24, wobei in dem Schritt des Bildens der Verbindung (6c) der Kern (16) innerhalb eines Hohlraums (17a; 20a) einer Matrize (17; 20) angeordnet wird, woraufhin geschmolzener, unvulkanisierter Kautschuk oder Harz in den Hohlraum (17a; 20a) eingespritzt und dann vulkanisiert oder verfestigt wird.

**27.** Dichtungselement (1) nach einem der Ansprüche 1 bis 18, wobei der poröse Körper (7) mit der Innenoberfläche des Rohrelements (6a, 6b), in das der poröse Körper (7) eingesetzt wurde, vulkanisationsverklebt oder wärmeverschweißt ist.

**28.** Dichtungselement (1) nach einem der Ansprüche 1 bis 18 und 27, wobei das Material des Rohrelements (6a, 6b), in das der poröse Körper (7) eingesetzt wurde, vulkanisiert oder sich verfestigt, nachdem es in die Poren des porösen Körpers (7) eingedrungen ist.

**29.** Dichtungselement (1) nach einem der Ansprüche 1 bis 18, 27 und 28, wobei der poröse Körper (7) mit der Innenoberfläche der Verbindung (6c) und mit der Innenoberfläche des Rohrelements (6a, 6b), in das der poröse Körper (7) eingesetzt wurde, vulkanisationsverklebt oder wärmeverschweißt ist.

30. Dichtungselement (1) nach einem der Ansprüche 1 bis 18, 27, 28 und 29, wobei das Material der Verbindung (6c) und das Material des Rohrelements (6a, 6b), in das der poröse Körper (7) eingesetzt wurde, vulkanisieren oder sich verfestigen, nachdem sie in die Poren des porösen Körpers (7) eingedrungen sind.

**Revendications**

1. Élément d'étanchéité (1) qui est déformable élastiquement, comprenant :

   un tube creux (6) et un corps poreux (7) qui est inséré à l'intérieur dudit tube (6) ;
   dans lequel :

   l'intérieur dudit tube (6) n'est pas complètement rempli par ledit corps poreux (7), et un espace contenant de l'air (8) est prévu entre une portion de la paroi intérieure dudit tube (6) et une portion de la surface extérieure dudit corps poreux (7) ;
   ledit corps poreux (7) est composé d'un matériau présentant un coefficient d'absorption d'eau d'au moins 10 % et de pas plus de 3 000 % dans un état non-compressé ;
   ledit corps poreux (7) est agencé de sorte que le volume dudit corps poreux (7) occupe au moins 2,5 % du volume interne dudit tube (6) ;
   et **caractérisé en ce que**
   ledit tube creux (6) présente une configuration, dans laquelle une pluralité d'éléments de tube creux (6a, 6b) est jointe à l'aide d'un joint (6c) ; et
   ledit corps poreux (7) est lié à la surface intérieure dudit joint (6c) et à la surface intérieure dudit élément de tube (6a, 6b), dans lequel ledit corps poreux (7) a été inséré.

2. Élément d'étanchéité (1) selon la revendication 1, dans lequel
   ledit corps poreux (7) est composé d'un matériau présentant une masse volumique en vrac d'au moins 10 kg/m$^3$ et de pas plus de 150 kg/m$^3$ dans un état non-compressé.

3. Élément d'étanchéité (1) selon la revendication 1 ou 2, dans lequel
   ledit corps poreux (7) est composé d'un matériau, pour lequel la contrainte de compression n'est pas supérieure à 1 N/cm$^2$ pour la compression, dans laquelle la dimension dans la direction de compression est réduite de 25 %.

4. Élément d'étanchéité (1) selon l'une quelconque des revendications 1 à 3, dans lequel
   ledit corps poreux (7) est composé d'un matériau, pour lequel la contrainte de compression n'est pas supérieure à 2,5 N/cm$^2$ pour la compression, dans laquelle la dimension dans la direction de compression est réduite de 50 %.

5. Élément d'étanchéité (1) selon l'une quelconque des revendications 1 à 4, dans lequel ledit corps poreux (7) est agencé de sorte que le volume dudit corps poreux (7) ne soit pas supérieur à 89 % du volume interne dudit tube (6).

6. Élément d'étanchéité (1) selon l'une quelconque des revendications 1 à 5, dans lequel ledit corps poreux (7) est agencé dans une plage d'au moins 4 % de la longueur entière dudit tube (6) dans la direction longitudinale dudit tube (6).

7. Élément d'étanchéité (1) selon l'une quelconque des revendications 1 à 6, dans lequel ledit tube (6) est une forme linéaire ou incurvée présentant deux extrémités ouvertes et au moins une portion dudit corps poreux (7) est agencée dans une plage, pour laquelle la distance à partir d'une des portions d'extrémité ouverte n'est pas supérieure à 33 % de la longueur entière dudit tube (6).

8. Élément d'étanchéité (1) selon la revendication 7, dans lequel ledit tube (6) est joint à l'autre tube à l'aide d'un joint pour former une boucle fermée.

9. Élément d'étanchéité (1) selon l'une quelconque des revendications 1 à 8, dans lequel ledit corps poreux (7) est composé d'un matériau qui contient au moins un parmi le caoutchouc mousse, le textile non-tissé et la mousse de polyuréthane.

**10.** Élément d'étanchéité (1) selon l'une quelconque des revendications 1 à 8, dans lequel ledit corps poreux (7) est composé d'un matériau qui contient du textile non-tissé.

**11.** Élément d'étanchéité (1) selon l'une quelconque des revendications 1 à 8, dans lequel ledit corps poreux (7) est composé d'un matériau qui contient de la mousse de polyuréthane.

**12.** Élément d'étanchéité (1) selon l'une quelconque des revendications 1 à 11, dans lequel ledit tube (6) est composé d'un élastomère présentant une gravité spécifique d'au moins 0,3 mais pas plus de 1 et un coefficient d'absorption d'eau inférieur à 50 %.

**13.** Élément d'étanchéité (1) selon la revendication 12, dans lequel ledit élastomère contient un copolymère de polyène non-conjugué d'éthylène α-oléfine.

**14.** Élément d'étanchéité (1) selon l'une quelconque des revendications 1 à 13, dans lequel ledit tube (6) présente un diamètre intérieur d'au moins 5 mm mais de pas plus de 40 mm dans un état non-compressé.

**15.** Élément d'étanchéité (1) selon l'une quelconque des revendications 1 à 14, dans lequel la superficie de section dudit corps poreux (7) dans l'état où ledit élément d'étanchéité (1) est utilisé, est au moins 5 % de et pas plus de 90 % de la superficie de section de la portion enfermée par ladite paroi intérieure dudit tube (6).

**16.** Élément d'étanchéité (1) selon l'une quelconque des revendications 1 à 15, dans lequel ledit élément d'étanchéité (1) est attaché à la portion périphérique extérieure d'un corps de porte de véhicule (2a) d'une porte de véhicule (2).

**17.** Élément d'étanchéité (1) selon l'une quelconque des revendications 1 à 15, dans lequel ledit élément d'étanchéité (1) est attaché à la portion périphérique extérieure d'une portion de logement d'un dispositif d'entraînement de véhicule.

**18.** Élément d'étanchéité (1) selon l'une quelconque des revendications 1 à 15, dans lequel ledit élément d'étanchéité (1) est attaché à la portion périphérique extérieure d'un corps de porte de bâtiment (4a) d'une porte de bâtiment (4).

**19.** Porte de véhicule (2) comprenant : ledit corps de porte de véhicule (2a) ; et l'élément d'étanchéité (1) selon la revendication 16.

**20.** Porte de bâtiment (4) comprenant : ledit corps de porte de bâtiment (4a) ; et l'élément d'étanchéité (1) selon la revendication 18.

**21.** Procédé de fabrication d'un élément d'étanchéité élastiquement déformable (1), ledit élément d'étanchéité élastiquement déformable (1) présentant un tube creux (6) d'une configuration, dans laquelle une pluralité d'éléments de tube creux (6a, 6b) est jointe à l'aide d'un joint (6c) et d'un corps poreux (7) qui est inséré à l'intérieur dudit tube (6), ledit procédé de fabrication d'un élément d'étanchéité (1) comprenant les étapes consistant à :

insérer ledit corps poreux (7) à l'intérieur d'au moins un desdits éléments de tube (6a, 6b) avant la jonction ;
après l'étape consistant à insérer ledit corps poreux (7) à l'intérieur d'au moins un desdits éléments de tube (6a, 6b), attacher chacun desdits éléments de tube (6a, 6b) aux deux portions d'extrémité d'un cœur formé en tige pour la formation du joint (6c) ;
former un joint (6c) composé d'une couche de caoutchouc vulcanisé ou d'une couche de résine qui peut être élastiquement déformée sur la circonférence extérieure dudit cœur (16), auquel lesdits éléments de tube (6a, 6b) sont attachés sur ses deux portions d'extrémité ; et
après l'étape consistant à former ledit joint (6c) qui est composé d'une couche de caoutchouc vulcanisé ou d'une couche de résine qui peut être élastiquement déformée sur la circonférence extérieure dudit cœur (16), retirer ledit cœur (16) d'une partie fendue (19) dudit joint (6c).

**22.** Procédé de fabrication d'un élément d'étanchéité (1) selon la revendication 21, dans lequel, dans l'étape consistant à former ledit joint (6c), ledit corps poreux (7) est lié et fixé à la surface intérieure dudit élément de tube (6a, 6b), dans lequel ledit corps poreux (7) a été inséré.

**23.** Procédé de fabrication d'un élément d'étanchéité (1) selon la revendication 21, dans lequel, dans l'étape consistant à former ledit joint (6c), ledit corps poreux (7) est lié et fixé à la surface intérieure dudit joint (6c) et à la surface intérieure dudit élément de tube (6a, 6b), dans lequel ledit corps poreux (7) a été inséré.

24. Procédé de fabrication d'un élément d'étanchéité (1) selon l'une quelconque des revendications 21 à 23, dans lequel, dans l'étape consistant à attacher lesdits éléments de tube (6a, 6b) aux deux portions d'extrémité du cœur (16), ledit corps poreux (7) à l'intérieur dudit élément de tube (6a, 6b) est amené à toucher ledit cœur (16).

25. Procédé de fabrication d'un élément d'étanchéité (1) selon l'une quelconque des revendications 21 à 24, dans lequel, dans l'étape consistant à former ledit joint (6c), une feuille de caoutchouc non-vulcanisé ou une feuille de résine est enroulée autour de la circonférence extérieure dudit cœur (16), suite à quoi de la chaleur et de la pression sont appliquées pour provoquer la liaison par vulcanisation de ladite feuille de caoutchouc non-vulcanisé ou pour provoquer le thermosoudage de ladite feuille de résine.

26. Procédé de fabrication d'un élément d'étanchéité (1) selon l'une quelconque des revendications 21 à 24, dans lequel, dans l'étape consistant à former ledit joint (6c), ledit cœur (16) est agencé dans une cavité (17a ; 20a) d'un moule (17 ; 20), suite à quoi le caoutchouc non-vulcanisé ou la résine fondue est injectée dans ladite cavité (17a ; 20a) et ensuite vulcanisée ou solidifiée.

27. Élément d'étanchéité (1) selon l'une quelconque des revendications 1 à 18, dans lequel ledit corps poreux (7) est lié par vulcanisation ou thermosoudé à la surface intérieure dudit élément de tube (6a, 6b), dans lequel le corps poreux (7) a été inséré.

28. Élément d'étanchéité (1) selon l'une quelconque des revendications 1 à 18 et 27, dans lequel le matériau dudit élément de tube (6a, 6b), dans lequel ledit corps poreux (7) a été inséré, se vulcanise ou se solidifie après être entré dans des pores dudit corps poreux (7).

29. Élément d'étanchéité (1) selon l'une quelconque des revendications 1 à 18, 27 et 28, dans lequel ledit corps poreux (7) est lié par vulcanisation ou thermosoudé à la surface intérieure dudit joint (6c) et à la surface intérieure dudit élément de tube (6a, 6b), dans lequel ledit corps poreux (7) a été inséré.

30. Élément d'étanchéité (1) selon l'une quelconque des revendications 1 à 18, 27, 28 et 29, dans lequel le matériau dudit joint (6c) et le matériau dudit élément de tube (6a, 6b), dans lequel ledit corps poreux (7) a été inséré, se vulcanisent ou se solidifient après être entrés dans des pores dudit corps poreux (7).

Fig.1

Fig.2

Fig.3

Fig.4

Fig.5A

Fig.5B

Fig.6A

Fig.6B

Fig.7A

Fig.7B

Fig.8

Fig.9

Fig.10

Fig.11

Fig.12

Fig.13

Fig.14

Fig.15

Fig.16

Fig.17

Fig.18

Fig.19

Fig.20

Fig.21

Fig.22

Fig.23

Fig.24

Fig.25

Fig.26

Fig.27A

Fig.27B

Fig.27C

Fig.27D

Fig.27E

Fig.28

Fig.29A

6a,6b

7

Fig.29B

6a,6b

7

Fig.30

16

Fig.31

6a

7

16

7

6b

Fig.32

Fig.33

Fig.34

Fig.35

Fig.36

**Fig.37**

**Fig.38**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9286239 A
- JP 2003081026 A
- JP 2001206166 A
- JP H275316 U
- WO 2009072503 A
- JP 2013234289 A
- EP 1452372 A1
- US 20020129558 A1